# EUROPÄISCHE PATENTSCHRIFT

(11) **EP 0 630 734 B1**
(45) Veröffentlichungstag und Bekanntmachung des Hinweises auf die Patenterteilung: **08.04.1998**
(21) Anmeldenummer: 94106872.8
(22) Anmeldetag: 03.05.1994
(51) Int. Cl.: B29C 45/44

(54) **Verfahren zur Entformung von Spritzgusshohlkörpern mit Hinterschneidungen in der Innenkontur und zugehöriger Formkern**
Method for demoulding of injection moulded hollow bodies with undercuts on the internal contour and corresponding core
Procédé de démoulage de corps creux moulés par injection avec des contre-dépouilles dans le contour interne et noyau associé

(30) Priorität: 22.06.1993 DE 4320644
(43) Veröffentlichungstag der Anmeldung: 28.12.1994
(73) Patentinhaber: GEYER GmbH + Co. KG WERKZEUGBAU, D-58579 Schalksmühle (DE)
(72) Erfinder: Skribanowitz, Hans, D-81243 München (DE); Baukloh, Horst, D-58540 Meinerzhagen (DE)
(74) Vertreter: Hassler, Werner, Dr.

(56) Entgegenhaltungen:
- GB-A- 2 135 236
- GB-A- 2 157 616
- US-A- 3 339 242
- US-A- 4 044 092

## Beschreibung

Die Erfindung betrifft ein Verfahren zum Entformen von Spritzgußhohlkörpern mit Hinterschneidungen in der Innenkontur unter Verwendung eines Formkerns, der im wesentlichen aus einem Innenkern und aus mindestens zwei Gruppen von relativ zum Innenkern verschiebbaren Segmenten besteht, wobei mindestens zwei verschieden geformte Arten von Segmenten Verwendung finden, die in vorgegebener Reihenfolge derart um den Innenkern angeordnet sind, daß sie in der Arbeitsposition des Formkerns zusammen mit dem Innenkern eine lückenlose Innenkontur des Artikels bilden und in der Entformungsposition die Hinterschneidungen so freigeben, daß der Artikel vom Formkern entfernbar ist.

Formkerne dieser Art dienen dazu, Hohlkörper aus Kunststoff oder anderen für Spritzguß geeigneten Materialien mit Innengewinde, Nasen, Vertiefungen, Kerben, Aussparungen sowie Durchbrüchen und sonstigen Hinterschneidungen in ihrer Innenkontur zu spritzen. Derartige Hohlkörper werden im folgenden der Kürze halber als Artikel bezeichnet. Die Außenflächen des Formkerns bilden im Spritzzustand die Form für die Innenkontur des Artikels. Da diese Innenkontur Hinterschneidungen aufweist, muß der Formkern nach Beendigung der Kühlzeit in einem Entformungszustand mit einem kleineren Außendurchmesser versetzt werden, der das Entformen des Artikels und damit seine Entfernung aus dem Spritzgußwerkzeug ermöglicht.

Die Außenkontur des Artikels wird durch eine Außenform bestimmt, in der sich gewöhnlich die Einspritzdüse für die plastifizierte Spritzmasse befindet. Einzelheiten der Entformung der Außenkontur des Artikels sind dem Fachmann geläufig. Sie bilden keinen Bestandteil der vorliegenden Erfindung.

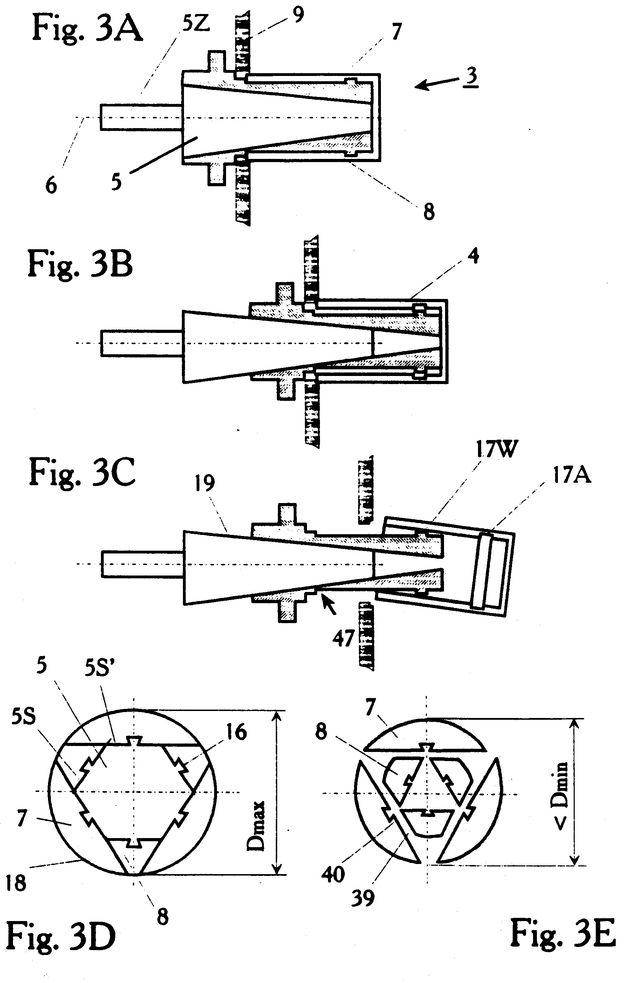

Ein Entformungsverfahren der gattungsgemäßen Art und ein zugehöriger Formkern sind aus der US 4 130 264 bekannt. Der dort beschriebene Formkern 3 und der zugehörige Entformungsvorgang sind in den Fig. 3A bis 3C schematisch dargestellt. Der Formkern 3 besteht aus einem Innenkern 5 und sechs Segmenten. Der Innenkern 5 besitzt die Form eines sechsseitigen Pyramidenstumpfes mit einem Zapfen 5Z an seiner Basis, mit der er in einer nicht dargestellten Grundplatte 12 des Spritzgußwerkzeuges 1 montiert ist. Die Segmente sind in zwei Gruppen unterteilt, die jeweils nur untereinander gleiche Segmente einer ersten Art bzw. einer zweiten Art enthalten. Die Segmente der einzelnen Gruppen sind abwechselnd auf den Seitenflächen 5S, 5S' des Innenkerns 5 angeordnet und gegenüber diesem mittels Schwalbenschwanzführungen 16 längsverschieblich. Die Verschieberichtung ist hierbei durch die Neigung der Seitenflächen 5S, 5S' gegenüber der Längsachse 6 des Innenkerns 5 festgelegt. Diese Neigung ist für die Segmente der ersten Art größer als für diejenigen der zweiten Art. Die Flanken 39 der Segmente der ersten Gruppe 8 sind entweder parallel zueinander oder derart zueinander geneigt, daß eine Bewegung dieser Segmente an den Segmenten der zweiten Gruppe 7 vorbei in Richtung auf die Längsachse 6 des Innenkerns 5 zu möglich ist. Diese Richtung wird im folgenden als radiale Richtung bezeichnet, während die dazu senkrechte, parallel zur Längsachse 6 des Innenkerns 5 verlaufende Richtung axiale Richtung genannt wird. Zur Entfernung des Artikels 4 nach dem Spritzvorgang werden die Segmente entlang den Seitenflächen 5S und 5S' des Innenkerns 5 nach vorne verfahren, d. h. in Richtung der Kernspitze. Durch die radiale Komponente dieser translatorischen Bewegung kommt es zu einer Kontraktion des Formkerns 3, wobei die Segmente der ersten Gruppe 8 unter denen der zweiten Gruppe 7 abtauchen (Fig. 3E), da die zugehörigen Seitenflächen 5S' steiler gegen die Längsachse 6 des Innenkerns 5 geneigt sind, als diejenigen der anderen Segmente. Durch diese Verkleinerung des Formkerndurchmessers über die gesamte Länge des Artikels 4 werden die Hinterschneidungen 17A freigegeben (Fig. 3C und 3E). Der Artikel 4, in dessen Inneren sich währenddessen noch die Segmente befinden, kann nun ausgestoßen werden. Dazu wird der Artikel 4 von der üblicherweise vorhandenen Auswerferplatte 9 des Spritzgußwerkzeuges 1 weiter mitgenommen während die Segmente stehen bleiben (Fig. 3C).

Ungünstig bei derartigen Formkernen sind die hohen Präzisionsanforderungen für die Schwalbenschwanzführungen und die daraus resultierenden erheblichen Fertigungskosten. Ein wesentlicher Nachteil liegt auch darin, daß sich dieser Formkern aufgrund seiner speziellen Kinematik schlecht für eine Standardisierung eignet. D. h., es handelt sich bei jedem Formkern dieser Art um eine Einzelanfertigung. Weitere Probleme liegen in der Begrenztheit der realisierbaren Artikelinnenlängen und der maximal erzielbaren Hinterschneidungsverhältnisse, die insbesondere durch die Neigungswinkel der Seitenflächen bedingt ist.

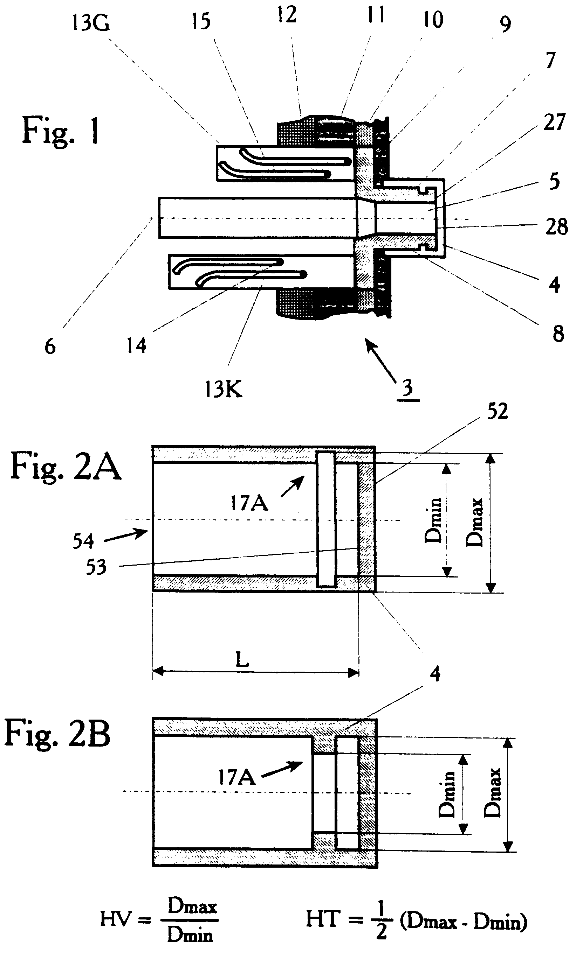

Unter dem Hinterschneidungsverhältnis HV ist hierbei das Verhältnis von größtem Innendurchmesser Dmax zu kleinstem Innendurchmesser Dmin des Artikels 4 zu verstehen, wie es in den Figuren 2A und 2B für exemplarische Artikelinnenkonturen dargestellt ist. Die Hinterschneidungen 17A in der Innenkontur 54 des Artikels 4 können entweder als Vertiefungen, beispielsweise Einstiche (Fig. 2A), oder als Erhebungen, z. B. Wülste (Fig. 2B), ausgebildet sein.

Ähnlich wirkende Formkerne sind in US 4 286 766, DE 33 38 686 A1 und DE 26 19 066 C3 beschrieben.

Aus der GB 2 157 616 A ist noch ein anderes Entformungsverfahren und ein zugehöriger Formkern für die Herstellung von zylindrischen Artikeln mit einer umlaufenden Innenhinterschneidung bekannt. Bei diesem Verfahren wird ein zylindrischer Inneren zunächst in axialer Richtung aus dem ihn umgebenden Kranz von Segmenten entfernt. Die Außenseiten der Segmente bestimmen, genauso wie bei den oben beschriebenen Formkernen, die Innenkontur des Artikels. Sie sollen anschließend an die Bewegung des Kerns unter Einwirkung von schräg zur Längsachse stehenden Führungsstangen, die an einer relativ zu den Segmenten bewegbaren Schieberplatte befestigt sind, nach innen zusammenfallen. Hierdurch soll die Hinterschneidung freigegeben werden, damit der Artikel aus dem Spritzwerkzeug entfernbar ist. Der diesbezüglich sehr kurz gefaßten Beschreibung und den Figuren ist jedoch kein Hinweis darauf zu entnehmen, wie die einzelnen Segmente im Querschnitt aussehen, ob mehr als eine Art von Segmenten vorhanden seien sollen und wie sie in einem einzigen Schritt in radialer Richtung nach innen aneinander vorbei geführt werden können, ohne sich gegenseitig zu behindern. Insofern ist die GB 2 157 616 A nicht geeignet, eine vollständige und nachvollziehbare Lehre über das Entformungsverfahren und eine konkrete, tatsächlich anwendbare Ausbildung des zugehörigen Formkerns zu geben.

Die US-A 4 044 092 beschreibt einen Formkern, bei dem eine Gruppe von Segmenten zwangsweise über eine Keilfläche des Formkerns bewegt wird. Die zweite Gruppe von Segmenten wird zunächst beim Ausziehen des Formkerns in der Hinterschneidung festgehalten, bis ein gegenüber dem Formkern in axialer Richtung beweglicher Ringteil diese zweite Gruppe in radialer Richtung verschiebt. Da die Bewegungen der beiden Gruppen mit dem Formkern in der beschriebenen Weise gekoppelt sind, ist die Variabilität dieser Einrichtung eingeschränkt.

Der Erfindung liegt die Aufgabe zugrunde, ein Verfahren zur Entformung von Spritzgußhohlkörpern mit Hinterschneidungen in der Innenkontur anzugeben, das es erlaubt, die Anwendungsmöglichkeiten von Formkernen zu erweitern und einen Formkern zur Anwendung des Verfahrens zu schaffen, der einfacher und billiger herzustellen ist, als herkömmliche Formkerne und der deutlich größere Hinterschneidungsverhältnisse und Artikellängen zuläßt, als bisher für Artikel mit umlaufenden Hinterschneidungen in der Innenkontur möglich ist.

Diese Aufgabe wird dadurch gelöst, daß
(a) in einem ersten Schritt zwischen dem Innenkern und sämtlichen Segmenten eine Relativverschiebung um eine Strecke in axialer Richtung stattfindet,
(b) in einem zweiten Schritt eine vorbestimmte Gruppe von Segmenten um eine vorgegebene Strecke im wesentlichen in radialer Richtung bewegt wird,
(c) in einem dritten Schritt die bisher nicht radial bewegten Segmente um eine vorgegebene Strecke in axialer Richtung verschoben werden,
(d) in einem vierten Schritt die Segmente der in Schritt (c) verschobenen Gruppen um eine vorgegebene Strecke im wesentlichen in radialer Richtung bewegt werden,
(e) die Schritte (c) und (d) solange wiederholt werden, bis sämtliche Gruppen von Segmenten in Bezug auf die Längsachse des Innenkerns um jeweils vorgegebene axiale bzw. radiale Strecken bewegt wurden.

Eine abgewandelte Lösung wird darin gesehen, daß
(a) in einem ersten Schritt zwischen dem Innenkern und sämtlichen Segmenten, die hinterschneidungsbildende Strukturen aufweisen, eine Relativverschiebung um eine Strecke in axialer Richtung stattfindet,
(b) in einem zweiten Schritt eine vorbestimmte Gruppe von diesen Segmenten um eine vorgegebene Strecke im wesentlichen in radialer Richtung bewegt wird,
(c) in einem dritten Schritt die bisher nicht radial bewegten Segmente dieser Gruppe um eine vorgegebene Strecke in axialer Richtung verschoben werden,
(d) in einem vierten Schritt die Segmente der in Schritt (c) verschobenen Gruppen um eine vorgegebene Strecke im wesentlichen in radialer Richtung bewegt werden,
(e) die Schritte (c) und (d) solange wiederholt werden, bis sämtliche Gruppen von Segmenten, die hinterschneidungsbildende Strukturen (17W) aufweisen, in Bezug auf die Längsachse des Innenkerns um jeweils vorgegebene axiale bzw. radiale Strecken bewegt wurden,
   - und alle Segmente, die keine hinterschneidungsbildende Strukturen aufweisen, relativ zum Innenkern keine Verschiebung erfahren, indem sie insbesondere mit dem Innenkern festverbunden oder einstückig mit diesem ausgebildet sind.

Eine weitere Abwandlung der Lösung wird darin gesehen, daß
(a) in einem ersten Schritt zwischen dem Innenkern und sämtlichen Segmenten eine Relativverschiebung um eine Strecke in axialer Richtung stattfindet,
(b) in einem zweiten Schritt eine vorbestimmte Gruppe von Segmenten um eine vorgegebene Strecke im wesentlichen in radialer Richtung bewegt wird,
(c) in einem dritten Schritt die bisher nicht radial bewegten Segmente, die hinterschneidungsbildende Strukturen aufweisen, um eine vorgegebene Strecke in axialer Richtung verschoben werden,
(d) in einem vierten Schritt die Segmente einer der in Schritt (c) verschobenen Gruppen um eine vorgegebene Strecke im wesentlichen in radialer Richtung bewegt werden,
(e) die Schritte (c) und (d) solange wiederholt werden, bis sämtliche Gruppen, deren Segmente hinterschneidungsbildende Strukturen aufweisen, in Bezug auf die Längsachse des Innenkerns um jeweils vorgegebene axiale bzw. radiale Strecken bewegt wurden,
   - wobei alle Segmente, die keine hinterschneidungsbildende Strukturen aufweisen, nur dem Verfahrensschritt (a) oder den Verfahrensschritten (a) und (b) unterzogen werden.

Die Erfindung unterscheidet sich insofern vom Stand der Technik, als die verschiedenen Gruppen von Segmenten relativ zueinander und zum Innenkern verschoben werden. Die Bewegung erfolgt zunächst für alle Segmente gemeinsam in axialer Richtung und zwar soweit, daß alle Segmente vom Innenkern freikommen, d. h., daß sie, bei der anschließenden radialen Bewegung auf die Längsachse des Innenkerns hin, nicht mit diesem kollidieren können. Die radiale Bewegung erfolgt zunächst nur für die erste Gruppe von Segmenten. Die zweite Gruppe der Segmente wird um eine weitere axiale Strecke nach vorne bewegt und erst dann radial nach innen bewegt. Sind mehr als zwei Segmentgruppen vorhanden, werden die Schritte 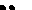 Verschiebung in axialer Richtung" und 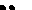 Bewegen in radialer Richtung" solange wiederholt, bis sämtliche Segmente die Hinterschneidung freigegeben haben und damit der Artikel vom Innenkern und den Segmenten entfernt werden kann.

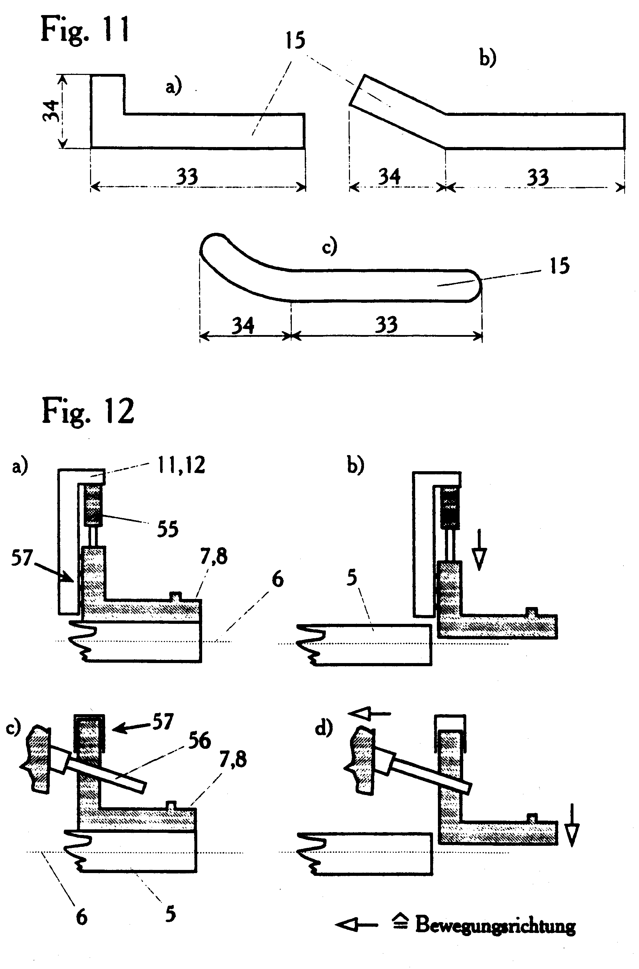

Unter der Anweisung 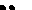 Bewegen [eines Segments um eine vorgegebene Strecke] in radialer Richtung" soll im Rahmen der vorliegenden Erfindung verstanden werden, daß die Bewegung um eine in rein radialer Richtung zu messende vorgegebene Strecke erfolgen soll. Die zugehörige Bewegungsbahn des Segments kann jedoch entweder ebenfalls in rein radialer Richtung liegen oder sie kann auch axiale Komponenten aufweisen, wie dies beispielsweise durch die Führungsbahnen 15 nach Fig. 11b) und 11c) bewirkbar ist. Letztere Variante ist demnach ebenfalls unter der Kurzform 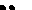 radiale Bewegung" als zur Erfindung gehörig gemeint. Wenn keine axiale Komponente vorhanden ist, wird dies im folgenden als 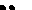 rein radiale" Bewegung jeweils hervorgehoben.

Das erfindungsgemäße Entformungsverfahren unterscheidet sich grundlegend in der Kinematik von denjenigen nach dem Stand der Technik, nach der US 4 130 264 und der US 4 044 092. Bei diesen erfolgt nämlich die Entformungsbewegung geradlinig. Sie besteht zwar auch aus einer axialen und einer radialen Komponente, diese sind aber durch die Neigung der Seitenflächen zur Langsachse des Innenkerns festgelegt und so miteinander verknüpft, daß sie stets gleichzeitig erfolgen und in einem festen Verhältnis zueinander stehen. Nach der Erfindung erfolgt eine Trennung von rein axialen Verschiebungen und radialen Bewegungen. Sie werden für jedes Segment zeitlich nacheinander durchgeführt, wobei die radiale Bewegung zur Längsachse des Innenkerns hin jeweils am Ende einer vorgegebenen Folge von axialen Bewegungsschritten steht. Mehrere Segmente können zu einer Gruppe zusammengefaßt sein und die Verschiebungen und die Bewegungen gemeinsam ausführen.

Durch die Entkopplung der Richtungskomponenten der Bewegung in räumlicher und zeitlicher Hinsicht eröffnen sich für die Gestaltung der Formkerne und der damit herstellbaren Artikel eine Vielzahl von neuen Möglichkeiten. Hervorzuheben ist in diesem Zusammenhang eine wesentliche Erweiterung der realisierbaren Hinterschneidungsverhältnisse. Diese ergibt sich schon daraus, daß die Segmentgruppen sich im Entformungszustand nicht mehr räumlich überlappen, wie nach dem Stand der Technik, sondern, daß sie axial hintereinanderliegend angeordnet sind. Hierdurch lassen sich die Segmente näher an die Längsachse des Innenkerns bewegen, so daß für die Hinterschneidung entsprechend mehr Raum zur Verfügung steht. Für Artikelformen, wie sie etwa in den Fig. 2A und 2B dargestellt sind, läßt sich zeigen, daß mit herkömmlichen Formkernen ein Hinterschneidungsverhältnis von circa 1,1 erreicht werden kann, während es bei dem erfindungsgemäßen Formkern bei Werten über 1,3 liegt.

Mit dem Verfahren nach der Erfindung lassen sich beliebige Anordnungen von Hinterschneidungen in der Innenkontur des Artikels herstellen, insbesondere solche, die sich über den gesamten Umfang erstrecken, oder mehrere, die in axialer Richtung hintereinander angeordnet sind. Treten Hinterschneidungen nur in begrenzten Bereichen des Umfanges auf, bietet es sich an, die Segmenteinteilung so vorzunehmen, daß einige Segmente keine Hinterschneidungsstrukturen aufweisen. Ist dies möglich, brauchen diese Segmente gemäß den Ansprüchen 2 und 3 nicht bewegt zu werden; sie können sogar mit dem Kern fest verbunden oder einstückig mit diesem ausgebildet sein. Diese drei Maßnahmen sind besonders günstig, da hierdurch der, für die übrigen Segmente zur Verfügung stehende, Raum vergrößert wird, wodurch für diese Segmente größere Verfahrwege in radialer Richtung und somit größere Hinterschneidungstiefen erreichbar sind. Ansonsten ist es sinnvoll, sie der ersten Segmentgruppe zuzuordnen und sie nur einmal axial oder axial und radial zu verschieben.

Die einzelnen vorgegebenen Strecken für die axialen Verschiebungen der Segmente werden gemäß Anspruch 4 zweckmäßigerweise so gewählt, daß die Segmente während der radialen Bewegung weder mit dem Innenkern, noch untereinander oder mit Segmenten einer anderen Gruppe kollidieren können. Hierdurch lassen sich die größten Hinterschneidungsverhältnisse erzielen. Eine Abweichung von dieser Vorschrift ist jedoch zulässig, wenn eine kurze Bauform und kurze Verfahrwege gewünscht werden. Dies führt aber zu einer Reduzierung der entformbaren relativen Hinterschneidungstiefen, da sich dann einzelne Segmentgruppen bzw. Segmente im Entformungszustand räumlich überschneiden.

Eine rein radiale Bewegung der Segmente ist besonders dann zweckmäßig, wenn für die einzelnen Segmente oder Segmentgruppen getrennte Antriebe erforderlich sind, wodurch die Bewegungsabläufe der beweglichen Teile des Formkern flexibler gesteuert und gestaltet werden können. Außerdem läßt sich durch diese Maßnahme die gesamte axiale Verschiebung der Segmente so gering wie möglich halten, da die rein radialen Bewegungen hierzu keinen Beitrag leisten. Damit läßt sich der für die Entformung erforderliche axiale Bauraum gering halten.

Die Bewegung der Segmente in radialer Richtung erfolgt in einer bevorzugten Variante der Erfindung in einer kombinierten radialen und axialen Bewegung, da hierdurch die Steuerung der Verschiebung über eine Kurvenbahn erfolgen kann, die aus der rein axialen Bewegung der Schieberplatten eine radiale Verschiebungskomponente erzeugt. Durch die Form der Kurvenbahn ist es möglich, die radiale Bewegung allmählich und somit weitgehend ruckfrei einsetzen zu lassen. Durch diese einfache mechanische Steuerung über Führungsbahnen und Führungsstifte lassen sich separate, und somit aufwendigere, Antriebs- und Steuerungsmaßnahmen vermeiden.

Bei allen Varianten zur Bewegungssteuerung ist jedoch darauf zu achten, daß im ersten Verfahrensschritt die axiale Verschiebung zwischen dem Innenkern und den Segmenten ausreicht, um eine radiale Bewegung der Segmente nach innen zuzulassen. Diese Strecke setzt sich aus der Länge des Berührungsbereiches zwischen den Segmenten und dem Innenkern in der Arbeitsposition und aus einer Sicherheitsstrecke zusammen.

Diese Verschiebung kann entweder durch eine gemeinsame Bewegung aller Segmente bei ortsfestem Innenkern, oder des Innenkerns bei festgehaltenen Segmenten, erfolgen. Genauso ist eine Kombination der beiden Möglichkeiten denkbar. Diese Auswahlmöglichkeiten erlauben eine Anpassung des Spritzgußwerkzeuges an die räumlichen Verhältnisse und/oder sonstige anwendungsspezifische Gegebenheiten.

Für den Entformungsvorgang nach der Erfindung ist es nicht erforderlich, daß ein Verfahrensschritt vollständig abgeschlossen ist, bevor der nächste einsetzt. So ist es denkbar, daß eine Segmentgruppe radial bewegt wird, während eine andere Gruppe noch bzw. schon eine axiale Verschiebung erfährt. Hierdurch läßt sich die Zeit für den Entformungsvorgang verkürzen.

In weiterer Zielsetzung der Erfindung soll der Innenkern eine einfache geometrische Form haben. Diese Aufgabe wird nach der Erfindung durch einen Formkern derart gelöst, daß
- daß die Segmente der beiden Gruppen (7, 8) zusammen mit dem Innenkern die Form der Innenwandung des Artikels festlegen,
- daß die Segmente zusätzlich zu dem die Innenwandung des Artikels festlegenden Bereich (35) einen zweiten Bereich (36) aufweisen, der sich im wesentlichen in radialer Richtung nach außen erstreckt und an dem Führungselemente für die Bewegung und Steuerung des Segments in Eingriff bringbar sind,
- daß der Innenkern (5) im Berührungsbereich (42) der Segmente einen konstanten Querschnitt entlang seiner Längsachse (6) aufweist,
- und daß die radialen und axialen Bewegungsschritte zeitlich nacheinander durchführbar sind.

Dieser Formkern unterscheidet sich insofern vom Stand der Technik als der Innenkern leicht und kostengünstig herstellbar ist. Komplizierte Führungen der Segmente auf dem Innenkern entfallen. Durch räumliche und zeitliche Trennung der axialen und radialen Entformungsschritte für die verschiedenen Segmentgruppen sind wesentlich höhere Hinterschneidungsverhältnisse zu erzielen, als dies mit herkömmlichen Formkernen möglich ist. Die einzelnen Segmentgruppen sind nämlich am Ende des Entformungsvorganges in axialer Richtung gestaffelt, so daß jeder Gruppe mehr Raum für eine Durchmesserkontraktion zur Verfüngung steht. Dabei bestimmt die mögliche Durchmesserkontraktion direkt die maximal entformbare Hinterschneidungstiefe HT.

Bei dem erfindungsgemäßen Formkern hat der entsprechende erste Bereich des Segments 35 im wesentlichen einen konstanten Querschnitt. Damit lassen sich theoretisch beliebig lange Artikel herstellen. Grenzen für die Baulänge in der Praxis sind die Formsteifigkeit des Formkerns, insbesondere der Segmente, und der zur Verfügung stehende Bau- bzw. Arbeitsraum.

Weiterhin kann durch Längsnuten 43 im Innenkern 5 die Positionierung und Führung für ausgewählte Segmente verbessert werden.

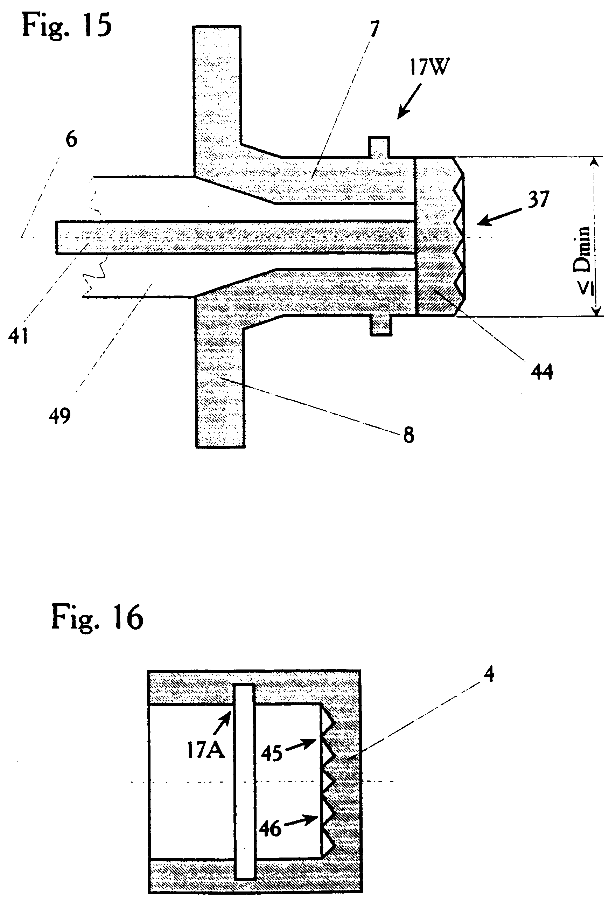

Der Innenkern gemäß der Erfindung muß nicht notwendigerweise massiv sein. Er kann auch zweiteilig ausgebildet sein, nämlich als ein Mittelkern mit einem ihn umgebenden Mantel, dessen Außenseite mit den Segmentinnenseiten in Berührung steht. Durch diese Bauart sind die Einsatzmöglichkeiten wesentlich erweitert. Der Mittelkern kann beispielsweise austauschbare Kühl- oder Heizvorrichtungen aufnehmen. Er kann auch axial verschieblich ausgeführt werden. Dies ist dann erforderlich, wenn der Boden des Artikels 53 Konturen aufweisen soll, die einer radialen Bewegung der Segmente während des Entformens entgegenstehen würden (Fig. 16). Derartige Konturen lassen sich nach Anspruch 18 in der Stirnfläche des Kopfbereiches 44 des Mittelkerns 41 anordnen (Fig. 15) oder, falls ein solcher nicht verwendet wird, gemäß Anspruch 16, unmittelbar in der Stirnfläche des Innenkerns ausbilden.

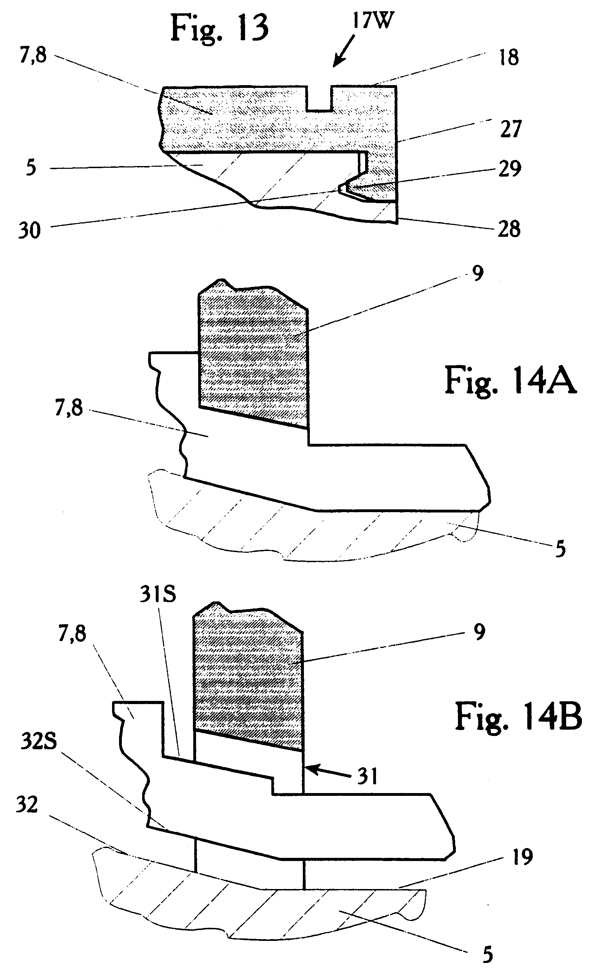

Durch den Einsatz von Verriegelungsmechanismen, gemäß Anspruch 13, etwa in der Form von Zapfen im vorderen Bereich der Segmente, die mit geeignet ausgebildeten Aufnahmen in der Stirnfläche des Innenkerns zusammenwirken, läßt sich die Stabilität der Segmente bei großen Baulängen gegen ein Aufspreizen vom Innenkern erhöhen (Fig. 13). Das Aufspreizen führt zu Spalten zwischen den einzelnen Segmenten und/oder dem Innenkern, in welche die unter hohem Druck stehende Spritzmasse in unerwünschter Weise eindringen kann. Durch die angesprochene Maßnahme ist eine noch größere Baulänge der Formkerne möglich, da die Neigung der Segmente aufzuspreizen mit deren Länge zunimmt, was die Verriegelung, unabhängig von der Länge der Segmente, verhindert.

Es ist vorteilhaft, die Segmentinnenseiten 20 so auszubilden, daß sie mit der Oberfläche 19 des Innenkerns 5 übereinstimmen, d. h., daß Segment und Innenkern 5 eine möglichst große gemeinsame Kontaktfläche besitzen. Hierdurch wird eine ungleichmäßige mechanische Belastung vermieden, die zu lokal begrenztem, und dadurch verstärktem, Verschleiß führt. Außerdem erhöht dies die allgemeine Stabilität der Anordnung. Ferner ist eine möglichst große Kontaktfläche dem Wärmetransport vom Artikel durch die Segmente in den Innenkern zuträglich. Aus spritzgußtechnischen Gründen ist es dabei besonders vorteilhaft, den Innenkern kühlbar zu gestalten.

Eine weitere Maßnahme zur Stabilisierung der Segmente gegen Aufspreizen besteht in der im Anspruch 14 angegebenen Ausbildung der die Segmente im Bereich des Artikelendes umgebenden Auswerferplatte 9. Die konisch ausgeführte Öffnung in dieser Platte wirkt mit einer entsprechend ausgebildeten Fläche an den Segmenten 31S zusammen und drückt diese in der Arbeitsstellung nach Art einer Spannzange gegen den Innenkern 5 (Fig. 14A und 14B). Durch eine konische Aufweitung 32 des Innenkerns 5, gegen die die Segmente von der Auswerferplatte in der Arbeitsposition gedrückt werden, kann diese Wirkung noch begünstigt werden. Die Fig. 14B stellt eine Auswerferplatte 9 mit konischer Bohrung 31, ein Segment und den Innenkern 5 als Explosionszeichnung dar.

Im Allgemeinen ist es zweckmäßig, die Segmente jeder Gruppe untereinander soweit wie möglich gleich auszubilden, da hierdurch die Herstellung vereinfacht und somit kostengünstiger wird. Zumindest sollte angestrebt werden, daß die Grundform für alle Segmente einer Gruppe übereinstimmt und nur die Segmentaußenseiten der speziellen Innenkontur des Artikels, die beispielsweise unregelmäßig angeordnete Hinterschneidungsstrukturen aufweisen kann, angepaßt werden.

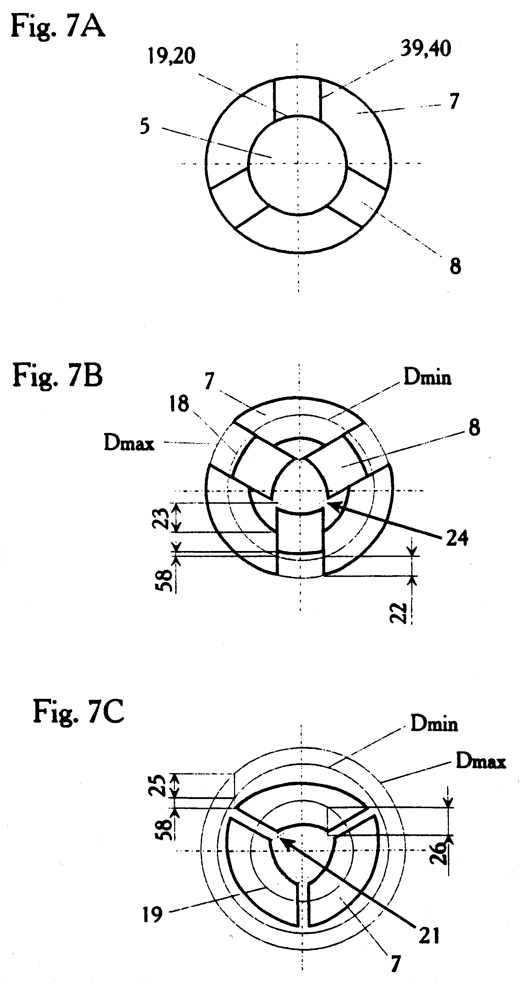

Andererseits lassen sich durch verschiedenartige Ausbildung der Segmente einer Gruppe besondere Anforderungen der Entformungsvorgänge berücksichtigen. Insbesondere können die Neigung der Flanken der Segmente und damit der Segmentquerschnitt variiert werden. Dadurch werden über die Verlagerung der Kollisionspunkte zwischen Segmenten einer Gruppe die maximalen radialen Verschiebewege einzelner Segmente einer Gruppe beeinflußt. Dies ist zum Beispiel dann erforderlich, wenn in begrenzten Bereichen der Innenkontur des Artikels besonders tiefe Hinterschneidungen auftreten, die zu entsprechend tiefen oder hohen hinterschneidungsbildenden Strukturen auf bestimmten Segmenten führen. Der Kollisionspunkt 24 (Fig. 7B, C) ist ein gedachter Punkt bzw. Linie, an dem die Segmente einer Gruppe bei zu großen radialen Bewegungen sich mit ihren Ecken an der Segmentinnenseite 20 als erstes berühren würden.

Hinsichtlich einer einfachen und zügigen Reparatur der Kurvenplatte bei Verschleiß ist es vorteilhaft, die Kurvenplatte nach Anspruch 15 mit dem zweiten Bereich des zugehörigen Segments zu verbinden. Durch eine lösbare Verbindung, etwa mittels Schrauben, ist auch eine problemlose Änderung der Verschiebewege möglich, da Kurvenplatten mit verschieden ausgebildeten Führungsbahnen beliebig gegeneinander austauschbar sind.

Durch die Verwendung zweier identischer, schräg gegeneinander versetzter Führungsbahnen, die mit jeweils einem Führungsstift zusammenwirken, kann eine rein translatorische Bewegung der Segmente sichergestellt werden, d. h. ohne Rotationen. Diese Maßnahme verhindert ein Kippen der Segmente während des Entformens und ermöglicht so eine exakte Positionierung aller Segmente in sämtlichen Bewegungsphasen.

Die Positionierung und Führung der Segmente zueinander und den übrigen Bauteilen kann auch mittels Wälzlagerführungen erfolgen, wie im Anspruch 18 angegeben.

Diese Maßnahme bietet sich insbesondere bei einem polygonalen Querschnitt des Innenkerns und bei Formkernen für große Artikel an. Hierdurch werden die Reibungskräfte vermindert und somit die Gleiteigenschaften der beweglichen Teile verbessert und deren Verschleißwirkung gesenkt.

In den Fällen, in denen die Segmente unterschiedliche axiale und/oder radiale Verfahrwege durchlaufen müssen, ist eine individuelle Steuerung und ein selektiver Antrieb notwendig. Hierfür sind hydraulische, pneumatische, mechanische oder elektromechanische bzw. Elektromagnetische Antriebsaggregate besonders geeignet. Diese lassen sich bei Bedarf für jede Bewegungsphase als getrennte Einheiten ausbilden und dementsprechend gemäß Anspruch 20 gezielt für einzelne Segmente über Sensoren und Steuereinheiten verschiedenster Arten betätigen.

Weiterbildungen der Erfindung sind in den Unteransprüchen angegeben. Ausführungsbeispiele der Erfindung sind in den Zeichnungen dargestellt und werden im folgenden beschrieben. Es zeigen in schematischer Darstellung:
Fig. 1 einen erfindungsgemäßen Formkern;
Fig. 2A und 2B exemplarische Artikel mit einer umlaufenden Hinterschneidung in ihrer Innenkontur;
Fig. 3A bis 3E einen Formkern nach dem Stand der Technik in Arbeitsstellung und während des Entformens in seitlicher und axialer Ansicht;
Fig. 4A bis 4D einen Formkern nach der Erfindung in Arbeitsstellung und während des Entformens in seitlicher Ansicht (Längsschnitt);
Fig. 5a) - 5f) verschiedene mögliche Querschnitte eines erfindungsgemäßen Innenkerns
Fig. 6A grundsätzlich mögliche Querschnitte für Segmente der zweiten Gruppe nach der Erfindung;
Fig. 6B den erfindungsgemäßen Formkerns in axialer Ansicht in Arbeitsstellung mit dem Innenkern und ungleichen Segmente;
Fig. 7A den erfindungsgemäßen Formkerns in axialer Ansicht in Arbeitsstellung mit dem Innenkern und gleichen Segmente;
Fig. 7B und 7C den Innenkern und die Segmente des erfindungsgemäßen Formkerns in axialer Ansicht während des Entformungsvorganges;
Fig. 8 ein erfindungsgemäßes Segment im Längsschnitt;
Fig. 9 schematisch den für Hinterschneidungsstrukturen verfügbaren Raum eines Segments im Längsschnitt;
Fig. 10 ein erfindungsgemäßes Segment mit Kurvenplatte;
Fig. 11 drei Varianten von Führungsbahnen;
Fig. 12a) - 12d) Varianten von separaten Steuerungen im Arbeitszustand und während des Entformens;
Fig. 13 schematisch die Verriegelungselemente an der Stirnseite des Innenkerns und eines Segments;
Fig. 14A und 14B die radiale Positionierung des Segments auf dem Innenkern mittels einer konischen Bohrung in der Auswerferplatte in der Arbeitsstellung und als Explosionszeichnung;
Fig. 15 ein Formwerkzeug im Längsschnitt mit Mittelkern, Mantel und Segmenten;
Fig. 16 einen exemplarischen Artikel mit Erhöhungen und Vertiefungen in seinem Boden;

Die Fig. 1 zeigt einen erfindungsgemäßen Formkern 3 in Arbeitsstellung. Er bildet gemeinsam mit der - hier nicht dargestellten - Außenform 2 das Spritzgußwerkzeug 1. Der Formkern 3 besteht aus mindestens zwei Gruppen von Segmenten, die innerhalb einer Gruppe im wesentlichen gleich sind. Mit ihren Außenseiten 18 bestimmen sie die Innenkontur 54 des Artikels 4. Die Segmente sind radial um den Innenkern 5 angeordnet. An jedem der Segmente ist eine Kurvenplatte 13G, 13K angebracht, in der sich die Kurvenbahnen 15 befinden. Der Innenkern 5 kann von einem oder mehreren Kühlkanälen durchzogen sein. Innenkern 5, Segmente und Kurvenplatten 13G, 13K werden durch Öffnungen in der Auswerferplatte 9, der großen und kleinen Schieberplatte 10, 11 sowie die Grundplatte 12 hindurch geführt. Die genannten Platten werden durch hier nicht gezeichnete Antriebe, Führungssäulen, Klinken und Anschläge positioniert und entsprechend den Erfordernissen während des Spritzens des Artikels 4 und seiner Entformung gesteuert.

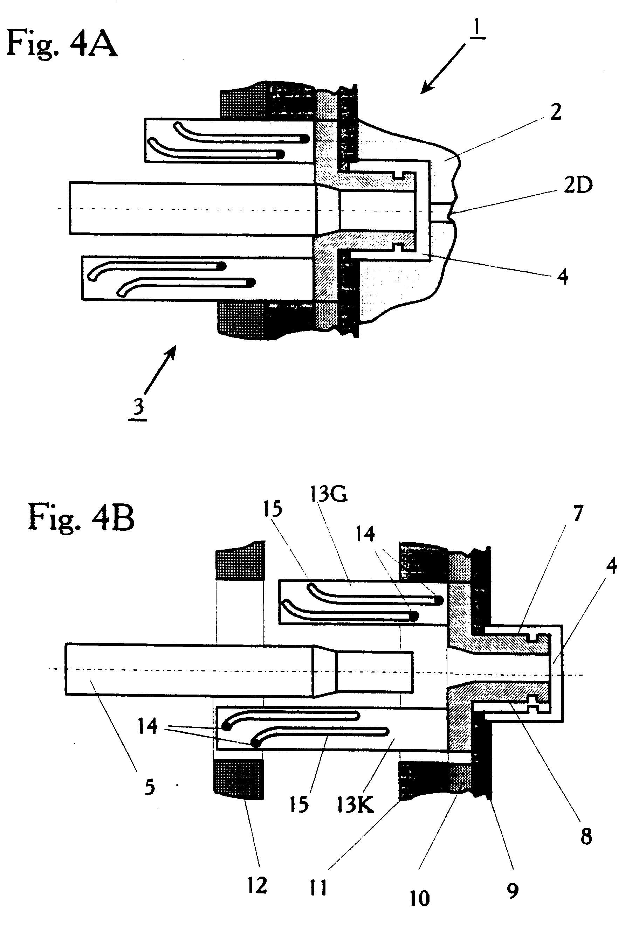

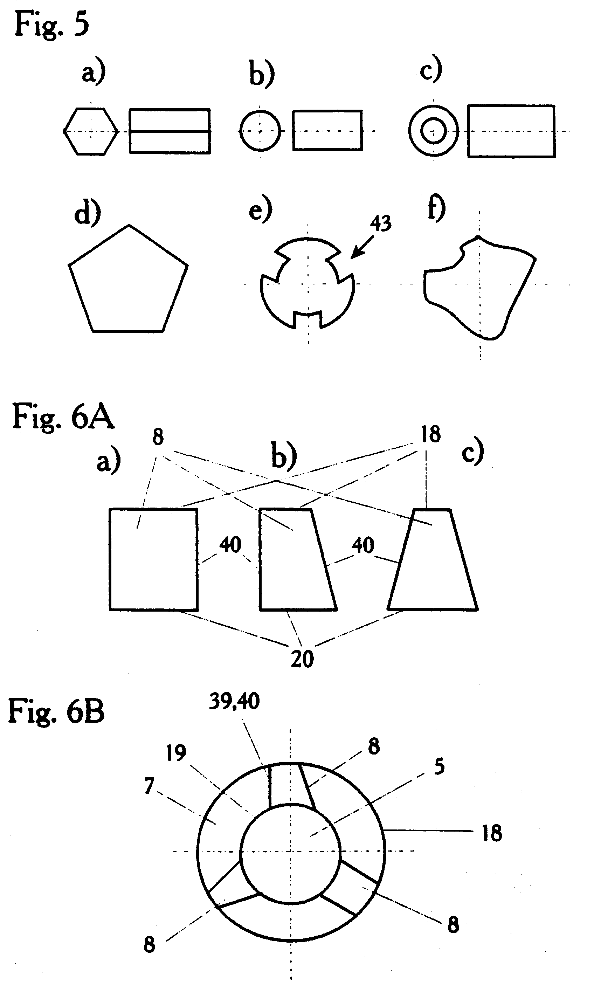

In den Fig. 4A bis 4D sind die verschiedenen Stadien des Entformungsverfahren nach Anspruch 1 anhand eines erfindungsgemäßen Formkerns 3 dargestellt. Angenommen sind zwei Gruppen von Segmenten, die jeweils aus drei Segmenten bestehen und die, wie in Fig. 6B in einer axialen Ansicht gezeigt ist, um einen zylindrischen Innenkern 5 angeordnet sind. Zur Erhöhung der Übersichtlichkeit ist jedoch nur jeweils ein Segment jeder Gruppe gezeichnet. Die Erläuterung geht von einer Steuerung der axialen und radialen Verschiebewege über eine an jedem Segment befestigte Kurvenplatte 13G, 13K aus. Durch die spezielle Form der zugehörigen Führungsbahnen 15 erfolgt die radiale Bewegung mit einer axialen Komponente. Fur eine rein radiale Bewegung der Segmente wäre beispielsweise eine Form der Führungsbahn gemäß Fig. 11a) oder eine der in Fig. 12a) bzw. Fig. 12c) dargestellten Einrichtungen erforderlich. Diese Details sind jedoch für den allgemeinen Ablauf des Entformungsvorganges nicht von Bedeutung.

Der Entformungsvorgang kann in vier Phasen unterteilt werden. (Fig. 4A bis 4D) Zum Zeitpunkt des Spritzgußvorgangs befinden sich alle Teile des Spritzgußwerkzeugs 1 in der Arbeitsposition. Dabei bilden Außenform 2 und Formkern 3 einen Hohlraum, der der Gestalt des Artikels 4 entspricht (Fig. 4A).

Zu Beginn der Entformungsbewegung trennt sich zunächst die Außenform 2 vom Formkern 3, dabei wird der Anguß abgetrennt. Danach werden die beiden Schieberplatten 10, 11 und die Auswerferplatte 9 um die Segmentlänge 50, zuzüglich einer Sicherheitsstrecke 51, axial nach vorne verschoben. Dabei schleppen sie die Segmente der ersten und der zweiten Gruppe mit. Die Grundplatte 12 und der Innenkern 5 nehmen an dieser Verschiebung nicht teil, so daß alle Segmente vom Innenkern 5 freikommen, d. h., daß die Hinterkanten 48K der Segmente der ersten Gruppe 8 die Stirnseite des Innenkerns 28 in axialer hinter sich gelassen haben. Die geraden, rein axiale Führungsabschnitte 33 der Führungsbahnen 15 in der Kurvenplatte 13K laufen gleichzeitig an den in der Grundplatte 12 befestigten Führungsstiften 14 vorbei. Die Paare der identischen Führungsbahnen 15 in den jeweiligen Kurvenplatten 13G,13K sind so angeordnet, daß sämtliche Segmente eine reine Translation ohne jegliche Rotation ausführen. Insbesondere wird durch den schrägen Versatz der beiden Führungsstifte 14 ein Kippen der Segmente verhindert. Damit ist der erste Schritt des Entformungsverfahrens gemäß Anspruch 1 abgeschlossen.

Im zweiten Schritt werden die beiden Schieberplatten 10, 11 sowie die Auswerferplatte 9 weiter axial nach vorne verschoben. Dadurch wird der radial/axiale Führungsabschnitt 34 der Führungsbahnen 15 in der Kurvenplatte 13K der Segmente der ersten Gruppe 8 wirksam, wodurch neben einer geringen weiteren axialen Verschiebung aller Segmente, die radiale Bewegung der Segmente der ersten Gruppe 8 erzwungen wird. Der radiale Anteil der radialen Bewegungsstrecke ist so bemessen, daß die Segmente um eine Strecke, die sich aus der maximalen Hinterschneidungstiefe HT= ½ (Dmax-Dmin) ableitet, plus einen Sicherheitsweg 58 radial nach innen bewegt werden (Fig. 2A, 2B, 7B). Die Segmente der ersten Gruppe 8 haben hierdurch die Hinterschneidungen 17A freigegeben und sind deshalb aus dem Artikel 4 entfernbar. Sie können somit bei den folgenden axialen Verschiebungen der übrigen Segmente mit dem Artikel in Ruhe bleiben. Dies wird üblicherweise durch eine Arretierung der zugehörigen kleinen Schieberplatte 11 mittels einer Klinkenanordnung sichergestellt wird. Der so erreichte Zustand ist in Fig. 4B und Fig. 7B dargestellt.

Im dritten Schritt bleiben die Grundplatte 12, die kleine Schieberplatte 11, der Innenkern 5 und die Segmente der ersten Gruppe 8 ortsfest. Die große Schieberplatte 10, die Auswerferplatte 9 und die Segmente der zweiten Gruppe 7 werden zusammen mit dem Artikel 4, wie im ersten Schritt, axial nach vorne verschoben. Die axiale Verschiebestrecke ist dabei so bemessen, daß die Segmente der zweiten Gruppe 7 beim anschließenden radialen Bewegen nicht mit den bereits radial bewegten Segmenten der ersten Gruppe 8 kollidieren können. Dies bedeutet in der Regel, daß die Hinterkante 48G der Segmente der zweiten Gruppe 7 die Stirnseite der Segmente 27 der ersten Gruppe 8 passiert haben.

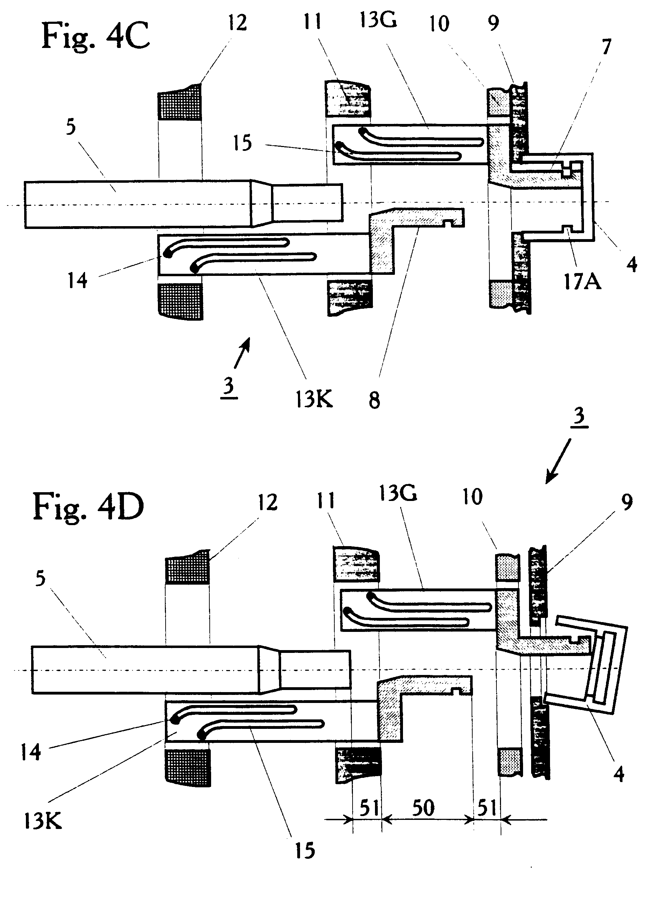

Über den gekrümmten, radial/axialen Führungsabschnitt 34 der Führungsbahnen 15 in der Kurvenplatte 13G wird das radiale Bewegen der Segmente der zweiten Gruppe 7 eingeleitet und damit der letzte Schritt des Entformungsverfahrens. In Fig. 4C und Fig. 7C ist der damit erreichte Endzustand gezeigt. Der Artikel 4 ist nun vom Formkern entfernbar, da sämtliche Hinterschneidungen 17A freigegeben sind.

Schließlich bewegt sich die Auswerferplatte 9, die bis dahin den Artikel 4 gehalten hat, weiter nach vorne, bis sie das vordere Ende der Segmente der zweiten Gruppe 7 erreicht. Dort wird sie ruckartig abgebremst. Der Artikel 4 löst sich hierdurch von der Auswerferplatte 9 und fallt in den nicht dargestellten Auffangbehälter, der sich unterhalb des Spritzgußwerkzeugs 1 befindet (Fig. 4D).

Das Schließen des Spritzgußwerkzeugs 1 für den nächsten Spritzvorgang verläuft analog in umgekehrter Reihenfolge. Ein Unterschied besteht jedoch darin, daß die Auswerferplatte 9 erst nach allen anderen Elementen des Spritzgußwerkzeuges 1 in die Arbeitsposition zurückkehrt und nicht gleichzeitig mit ihnen. Die Auswerferplatte 9 kann dadurch noch eine abschließende Verriegelungs- bzw. Spannfunktion für die Segmente übernehmen, wie dies anhand Fig. 14A und 14B im folgenden erläutert wird.

Während die axiale Verschiebung der Segmente zweckmäßigerweise durch die verschiedenen Schieberplatten erfolgt, die ihrerseits durch hydraulische Zylinder oder ähnlich geeignete Einrichtungen angetrieben werden, sind für die radiale Bewegung der Segmente mehrere Varianten denkbar. Die bereits genannten Kurvenplatten 13G, 13K haben den Vorteil, daß sie über rein axiale Verschiebungen der Schieberplatten betätigbar sind, und somit keine weiteren Antriebe oder Steuerungen für die radialen Bewegungen erforderlich sind. Wegen der einfachen Form der Kurvenplatten 13G, 13K sind sie leicht herstellbar und können nach Belieben ausgetauscht werden, ohne daß an den sonstigen Komponenten Änderungen erforderlich sind.

Eine rein radiale Bewegung der Segmente kann auf verschiedene Art erfolgen. Beispielsweise ist eine Aufnahme der Segmente in einer Schieberplatte mit radialen Führungsbahnen möglich. Der Antrieb für die Segmente einer Gruppe erfolgt zweckmäßigerweise für alle gemeinsam, etwa in der Art eines Dreibackenfutters, wie es z. B. von Drehmaschinen bekannt ist. Zur Durchführung der radialen Bewegung sind verschiedene Kopplungsmechanismen verwendbar, die z. B. auch als Schnellspanneinrichtung ausgeführt sein können.

Genauso kann bei einer rein radialen Bewegung jedem Segment einer Gruppe ein eigener Antrieb zugeordnet sein, der eine separate Ansteuerung erlaubt. Dies ist beispielsweise dann sinnvoll, wenn der Artikel 4 an seinem Umfang verschieden tiefe Hinterschneidungen 17A aufweist, die unterschiedlich große radiale Bewegungen erfordern bzw. zulassen.

Für die radiale Führung der Segmente in Bezug auf die zugehörige Schieberplatte sind im Prinzip alle gängigen Führungen für gradlinige Bewegungen geeignet. Insbesondere seien hier Gleit- und Wälzkörperführungen, wie z. B. T-Nuten bzw. Linearführungseinheiten, genannt.

Mögliche Querschnitte des Innenkerns 5 zeigt die Fig. 5a) - Fig. 5f). Die Form des Innenkerns 5 ist demzufolge nicht auf zylindrische Gestalt (Fig. 5a)) beschränkt, sondern kann auch regelmäßig oder unregelmäßig mehreckig begrenzt sein. Sämtliche Innenkerne können auch als Hohlkörper ausgebildet sein, wie dies in Fig. 5c) angedeutet ist. Der Hohlraum kann dann beispielsweise Kühl- bzw. Heizeinrichtungen aufnehmen oder einen Mittelkern, dem weitere Funktionen zugeordnet werden können, wie dies im Zusammenhang mit Fig. 15 erläutert ist.

Es sind auch andere Begrenzungslinien des Querschnitts des Innenkerns 5 denkbar (Fig. 5e)), jedoch wird man die Auswahl in der Praxis auf einfach herzustellenden geometrische Formen beschränken. Die hier angesprochenen Querschnittsformen beziehen sich auf den vorderen Abschnitt des Innenkerns 5, der mit den Berührungsbereichen der Segmente der ersten und zweiten Gruppe in der Arbeitsposition des Formkerns 3 Kontakt hat. Der daran anschließende Teil des Innenkerns 5, über den er mit dem übrigen Spritzgußwerkzeug 1 verbunden ist, spielt für die Erfindung keine Rolle. Er kann nach den Erfordernissen der Praxis gestaltet werden.

Ebenso kann der Querschnitt der Segmente in gewissen Grenzen variiert werden, wie dies in Fig. 6A für Segmente der ersten Gruppe 8 mit einer ebenen Segmentinnenseite 20 gezeigt ist. Derartige Segmente sind an die Verwendung mit einem polygonalen Innenkern 5 gemäß Fig 5d) angepaßt. In Bezug auf die Segmentinnenseite dürfen die Flanken der Segmente 40 maximal einen rechten Winkel bilden, sodaß die Breite der Segmentaußenseite 18 nicht größer als die der Segmentinnenseite 20 ist. In Fig. 6Aa) ist dieser Grenzfall dargestellt, der zu parallelen Flanken 40 und somit einem rechteckigen Querschnitt führt. Die Flanken der Segmente 40 können jedoch auch derart nach innen geneigt sein, daß sie mit der Segmentinnenseite 20 einen spitzen Winkel bilden, so daß eine Trapezform entsteht, deren Basis durch die Segmentinnenseite 20 gebildet wird (Fig. 6Ac)). Die Winkel sind für jede Flanke im zuvor genannten Rahmen frei wählbar (Fig. 6Ab)). Dabei ist jedoch darauf zu achten, daß die Flanken der Segmente 39, 40 so gestaltet sind, daß die Segmente der ersten Gruppe 8 sich unabhängig von den Segmenten der zweiten Gruppe 7 sowohl in axialer Richtung als auch in radialer Richtung nach innen bewegen können. Fig. 6A zeigt drei grundsätzliche Möglichkeiten die Flanken der Segmente 40 und damit auch die Querschnitte der Segmente festzulegen. Da sich die Querschnitte der Segmente innerhalb einer Gruppe nicht unmittelbar gegenseitig beeinflußen, können sie unabhängig voneinander festgelegt werden. Sie können entweder weitgehend gleich sein, wie in Fig. 7A, oder nach Fig. 6B unterschiedliche Querschnitte aufweisen.

Die Flanken der Segmente 39 der zweiten Gruppe 7 werden zweckmäßigerweise so ausgebildet, daß sie in der Arbeitsstellung des Formkerns mit denjenigen der ersten Gruppe 8 lückenlos zusammen passen, wie dies u. a. in Fig. 6B in einer axialen Ansicht für einen zylindrischen Innenkern 5 gezeigt ist. Die Anpassung der Segmentinnenseite in diesem Fall und die Orientierung der Flanken der Segmente 40 für die in Fig. 6A gezeigten Grundformen ist deutlich erkennbar. Durch diesen Aufbau hat der Formkern eine besonders hohe mechanische Stabilität, die auch der Belastung während des Spritzens widersteht. Zudem ist dies dem ungehinderten Wärmeübergang vom erkaltenden Artikel zum üblicherweise gekühlten Innenkern besonders zuträglich.

In Fig. 7B sind die Segmente nach dem zweiten Schritt des Entformungsvorganges in axialer Ansicht dargestellt. Der Zeitpunkt entspricht dem der Fig. 4B. Die Segmente der ersten Gruppe 8 wurden bereits radial bewegt. Sie wurden soweit radial bewegt, daß alle drei Segmente der ersten Gruppe 8 durch die Öffnung im Bereich des kleinsten Artikelinnendurchmessers Dmin aus dem Inneren des Artikels 4 herausgezogen werden können. Dazu ist einerseits erforderlich, daß die Segmente nicht mit ihren Außenseiten an der Artikelwandung am kleinsten Artikelinnendurchmesser Dmin hängen bleiben. Ein Segment der ersten Gruppe 8 muß dazu mindestens den sogenannten erforderlichen radialen Verschiebeweg 22 zurücklegen. Andererseits dürfen die Segmente auch nicht an ihren Innenseiten kollidieren. Dies wäre der Fall, wenn die Segmente bis zum Kollisionspunkt 24 radial bewegt würden. Der Kollisionspunkt 24 ist ein gedachter Punkt bzw. Linie, an dem die Segmente einer Gruppe bei zu großen radialen Bewegungen sich als erstes berühren würden. Der maximal zulässige radiale Verschiebeweg 23 eines Segments der ersten Gruppe 8 ist die Strecke, die ein Segment der ersten Gruppe 8 von seiner Arbeitsstellung aus in radialer Richtung zurücklegen kann, bevor es mit seiner Innenseite den Kollisionspunkt 24 erreicht.

Bei der Konstruktion eines erfindungsgemäßen Formkerns 3 muß darauf geachtet werden, daß sämtliche Segmente und die radialen Verschiebewege so dimensioniert werden, daß ein vorzugebender Sicherheitsweg 58 zwischen Segmentaußenseite 18 und Artikelwandung am kleinsten Artikelinnendurchmesser Dmin und ein Sicherheitsabstand zwischen den Segmenten an deren Innenseite eingehalten wird. Dieser Sicherheitsweg 58 berücksichtigt u. a. ein Schwinden des Artikels 4 beim Abkühlen. Sollten Segmente untereinander bzw. mit dem Artikel 4 kollidieren, kann dies zu Schäden am Formkern 3 und/oder dem Artikel 4 führen. Beides würde die Qualität des betreffenden bzw. folgender Artikel gefährden.

Der erforderliche radiale Verschiebeweg 25 und der zulässige radiale Verschiebeweg 26 eines Segments der zweiten Gruppe 7 sind anhand einer axialen Ansicht der Segmente der zweiten Gruppe 7 nach dem vierten Schritt des Entformungsvorganges in Fig. 7C gezeigt. Die zugehörige seitliche Ansicht dieses Stadiums des Entformungsvorganges ist in Fig. 4C abgebildet. Die erforderlichen bzw. zulässigen radialen Verschiebewege der Segmente der zweiten Gruppe 7 werden durch die selben Bedingungen bestimmt, wie sie für die radialen Verschiebewege der Segmente der ersten Gruppe 8 gelten. Aufgrund der anderen Abmessungen und Form dieser Segmente sind die Beträge der erforderlichen radialen Verfahrwege 25 und zulässigen radialen Verfahrwege 26 der Segmente der zweiten Gruppe 7 von denen der ersten Gruppe 8 verschieden. Die unterschiedlichen Formen der Segmente bedingen zwangsläufig auch eine andere Lage der zugehörigen Kollisionspunkte 21, 24.

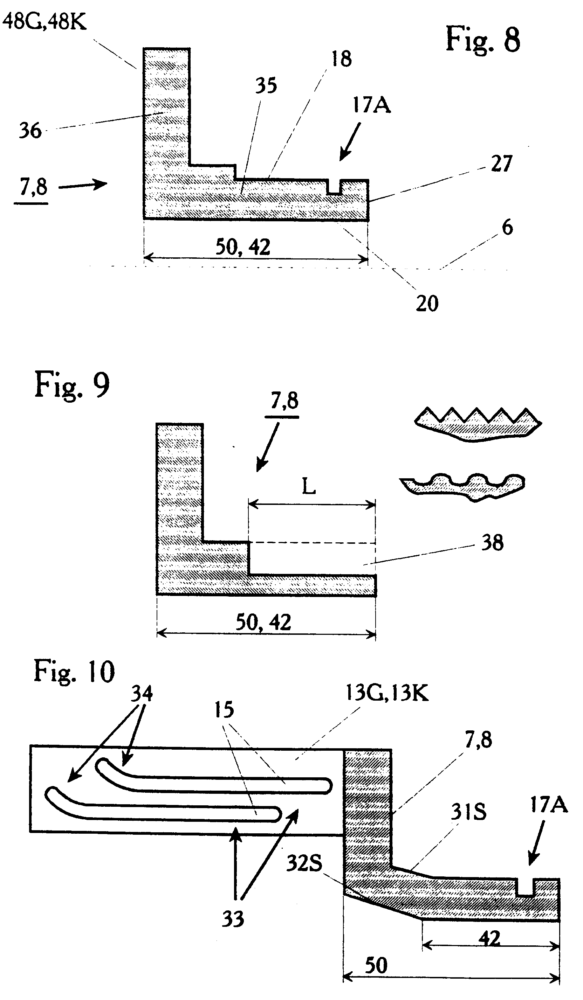

In Fig. 8 ist eine beispielhafte Grundform eines Segments schematisch in seitlicher Ansicht gezeigt. Diese besonders zweckmäßige Grundform des Längsschnitts der Segmente ist üblicherweise für beide Arten von Segmenten gleich. Es sind ein erster Bereich des Segments 35 und ein zweiter Bereich des Segments 36 zu erkennen. Der erste Bereich des Segments 35 erstreckt sich im wesentlichen in axialer Richtung und formt mit der Segmentaußenseite 18 die Innenkontur des Artikels 54. Er stützt sich mit der Segmentinnenseite 20 gegen den, hier nicht dargestellten, Innenkern 5 ab. Der im wesentlichen radial verlaufende, zweite Bereich des Segments 36 dient dazu, die Führungs-und Steuerungselemente aufzunehmen. Beispiele hierfür sind die in Fig. 10 dargestellte Kurvenplatte 13G, 13K und separaten Antriebe für die radiale Bewegung der Segmente während des Entformens aus der Fig. 12. Da bei dem in der in den Fig. 8 und 9 dargestellten Segmentform keine Abschrägungen an der Segmentinnenseite 32S vorhanden sind, wie es bei der in den Fig. 10, Fig. 14A und Fig. 14B dargestellten Form des Segments der Fall ist, ist der Berührungsbereich 42 des Segments mit dem Innenkern identisch mit der Segmentlänge 50. Der Querschnitt des zugehörigen Innenkerns muß demgemäß mindestens über die Länge dieses Bereiches konstant sein.

Unter Berücksichtigung der Anforderungen an die Bauteilfestigkeit eines Segments steht für die hinterschneidungsbildenden Strukturen 17W auf der Segmentaußenseite 18 ein begrenzter radialer Bauraum zur Verfügung. Fig. 9 zeigt schematisch seine Lage. Innerhalb dieses verfügbaren Bauraums 38 können solche Konturen aufgebracht sein, die eine Entformung des Artikels 4 durch eine radiale Bewegung der Segmente gestatten. Beispiele hierfür sind in der Fig. 9 rechts oben gezeigt. Derartige Hinterschneidungsstrukturen dürfen offensichtlich ihrerseits keine sich in axialer Richtung erstreckende Hinterschneidungen aufweisen, da diese eine rein radial gerichtete Entformungsbewegung nicht zulassen würden.

In Längsrichtung kann sich der für hinterschneidungsbildende Strukturen 17W verfügbare Bauraum 38 über den gesamten ersten Bereich 35 des Segments erstrecken. Dieser erste Bereich des Segments 35 bestimmt mit dem zweiten Bereich des Segments 36 die Segmentlänge 50 und damit auch den Berührungsbereich 42 des Segments mit dem Innenkern 5. Beide verlaufen von der Stirnseite des Segments 27 bis zu dessen Hinterkante 48G, 48K.

Fig. 10 zeigt ein Segment, an dem eine Kurvenplatte 13G, 13K mit zwei identischen, schräg gegeneinander versetzten Kurvenbahnen 15 befestigt ist. Die Kurvenbahnen 15 können auf verschiedene Arten ausgeführt sein. Generell bestehen sie aus zwei Bereichen. Der eine, der rein axiale Führungsabschnitt 33 (Fig. 11), erstreckt sich in rein axialer Richtung. An diesen schließt sich der radial/axialeFührungsabschnitt 34 an, der die Verschiebung in radialer Richtung bewirkt. Dieser zweite Bereich kann so gestaltet sein, daß die Bewegung des Segments in rein radialer Richtung erfolgt (Fig. 11a)), oder in einer Absenkung, die sowohl eine radiale, als auch eine axiale Komponente besitzt (Fig. 11b) und 11c)). Die Länge des axialen Führungsabschnitts 33 sollte mindestens so groß sein, daß sie der Segmentlänge 50 plus Sicherheitsstrecke 51 entspricht und der radial/axiale Führungsabschnitt 34, der ebenfalls eine Sicherheitsstrecke 51 enthält, ist durch den erforderlichen radialen Verschiebeweg 22, 23 definiert.

In Fig. 10 sind auch Abschrägungen an der Segmentinnenseite 32 S und an der Segmentaußenseite 31S zu sehen. Sie dienen einer zusätzlichen Stabilisierung der Segmente gegen Aufspreizen in der Arbeitsstellung durch eine entsprechende Formgebung der Auswerferplatte 9 und des Innenkerns 5. In diesem Fall ist der Berührungsbereich 42 der Segmente mit dem Innenkern 5 verschieden von der Segmentlänge 50. Der Bereich konstanten Querschnitts des Innenkerns 5 ist dementsprechend kürzer als die eigentliche Segmentlänge 50.

Zwei alternative Möglichkeiten, zur Steuerung der radialen Bewegung der Segmente über Kurvenbahnen 15, sind in Fig. 12 abgebildet. Die erste Variante bedient sich Hydraulikzylinder 55, die jeweils einzeln so an jedem Segment angeordnet sind, daß sie das Segment in rein radialer Richtung bewegen können. Der radialen Bewegung muß eine ausreichende axiale Relativbewegung zwischen Innenkern 5 und Segment vorausgegangen sein, damit die radiale Bewegung am Innenkern oder Segmenten einer zuvor radial bewegten Gruppe vorbei möglich ist. Fig 12 a) zeigt den Innenkern 5, ein Segment und den zugehörigen Hydraulikzylinder 55 in der Arbeitsstellung, während Fig. 12 b) das System nach der radialen Bewegung des Segments darstellt. Ein Ende des Hydraulikzylinders 55 kann zweckmäßigerweise an der zum Segment gehörigen Schieberplatte 10, 11 abgestützt sein

Eine weitere Art, die radiale Bewegung eines Segments einzuleiten, ist die Verwendung einer in Bezug auf die Längsachse 6 des Innenkerns 5 schräg angeordnete Führungsstange 56, wie sie in den Fig. 12 c) und 12 d) dargestellt ist. Die Führungsstange 56 wird in einer entsprechend geformten und angeordneten Führungsbuchse, z.B. im zweiten Bereich des Segments 36, verschieblich aufgenommen. In der Arbeitsposition (Fig 12 c)) findet zwischen Innenkern 5, Segment und Führungsstange 56 keine Relativbewegung statt. Bevor die in Fig. 12 d) gezeigte radiale Bewegung des Segments durchgeführt werden kann, muß der Innenkern 5 zurückgezogen worden sein, oder Führungsstange 56 und Segment axial nach vorne verschoben worden sein. Nun wird die an einer verschiebbaren Platte starr befestigte Führungsstange 56 axial nach hinten verschoben, während das Segment, bedingt durch eine entsprechende Führung gegen Kippen 57 der Segmente und die Neigung der Führungsstange 56, sich ohne axiale Komponente rein radial bewegt.

Für die beiden in den Fig. 12a)-12d) dargestellten rein radial wirkenden Steuerungsvorrichtungen sind zweckmäßigerweise eigene Führungen gegen Kippen 57 der Segmente während des Entformens vorzusehen.

Eine geeignete Ausbildung der Verriegelungselemente, die das Aufspreizen der Segmente während des Spritzvorganges verhindern sollen, ist in Fig. 13 abgebildet. Ein Zapfen 29 an der Innenseite 20 des Segments greift in der Arbeitsstellung in eine entsprechende Aufnahme 30 in der Stirnseite 28 des Innenkerns 5. Eine Formgebung der Verriegelungselemente mit sich verjüngendem Querschnitt, beispielsweise als konische Zapfen, sorgt für eine Zentrierung und Verspannung der Segmente gegenüber dem Innenkern 5 während die Segmente nach dem Auswerten des Artikels in die Arbeitsposition zurückkehren. Die Verriegelungselemente müssen so ausgeführt sein, daß während des Spritzvorganges keine plastifizierte Spritzmasse in einen etwaigen Spalt zwischen Zapfen 29 und Aufnahme 30 eindringen kann. Dies kann zu einer Beschädigung des Formkerns 3 und einer unerwünschten Gratbildung am Artikel führen.

Eine weitere Maßnahme zur Stabilisierung der Segmente während des Spritzvorganges ist die in Fig. 14A und 14B dargestellte Ausgestaltung der Auswerferplatte 9, der Segmente und des Innenkerns 5. Durch die konische Bohrung 31 in der Auswerferplatte 9 wird jedes Segment mittels der angepaßten Abschrägung an der Segmentaußenseite 31S verspannt. Dies geschieht, indem die Auswerferplatte 9 das Segment in axialer Richtung gegen die konische Aufweitung 32 am Innenkern drückt. Dazu ist eine entsprechende Abschrägung an der Segmentinnenseite 32S vorzusehen, die mit der konischen Aufweitung 32 zusammen wirkt. Wie bereits erwähnt, wird die Auswerferplatte 9 beim Schließen des Formkerns nach dem Auswerten des Artikels als letztes in die Arbeitsposition gebracht, so daß sie die Verspannung der Segmente mit dem Innenkern erst dann aufbaut, wenn zwischen diesen keine Relativbewegung mehr stattfindet.

Fig. 15 zeigt einen Längsschnitt durch einen Mittelkern 41, den zugehörigen Mantel 49 und zwei Segmente. Eine solche Ausführung dieser Komponenten des Formkerns dient dazu, Artikel 4 herzustellen, deren spezielle Innenkontur 54 eine Entformung mittels einer radialen Bewegung der Segmente nicht zulassen würde. Dies ist der Fall, wenn sich im Boden des Artikels 53 Erhöhungen 45 und Vertiefungen 46 befinden (Fig. 16), die bis in den Bereich der Stirnseite der Segmente 27 ragen, sich jedoch im Durchmesser nicht über den Bereich des kleinsten Artikelinnendurchmessers Dmin erstrecken. Die Erhöhungen 45 und Vertiefungen 46 im Boden des Artikels 53 werden durch die Oberflächenstruktur in der Stirnseite des Kopfbereichs 44 des Mittelkerns 41 bestimmt. Sie müssen jedoch so gestaltet sein, daß sie sich mit einer rein axialen Bewegung entformen lassen. Die Entformung des Artikels 4 erfolgt nach den Schritten des erfindungsgemäßen Verfahrens. Hierbei bewegt sich der Mittelkern 41 mit seinem Kopfbereich 44 mit dem Artikel 4 mit, während alle Segmente bewegt werden. Die Hinterschneidung 17A in der Innenkontur des Artikels 54 sind danach freigegeben. Nun kann der Mittelkern 41 mit dem Kopfbereich 44, dessen Außendurchmesser kleiner als der kleinste Artikelinnendurchmesser Dmin sein muß, wie ein gewöhnlicher Kern aus dem Inneren des Artikels 4 gezogen werden. Alternativ kann der Artikel von der Auswerferplatte 9 über den Kopfbereich 44 mitgenommen und dann ausgeworfen werden.

Fig. 16 zeigt einen Artikel, wie er mit dem in Fig. 15 dargestellten Formkern 3 herstellbar ist. Im Boden des Artikels 53 sind Erhöhungen und Vertiefungen zu sehen, die die radiale Bewegung der Segmente während des Entformungsvorganges behindern würden, wären diese Strukturen in den Stirnseiten der Segmente 27 selbst ausgeformt. Sind derartige Strukturen nur im Bereich des Innenkerns 5 erforderlich, so können diese natürlich unmittelbar auf der Stirnseite des Innenkerns 28 ausgebildet sein.

Die Figuren und die zugehörigen Beschreibungen sind von rotationssymmetrischen Artikeln 4 mit umlaufenden Hinterschneidungen 17A, wie sie in den Fig. 2A und 2B ausgegangen, da sich hierdurch das Wesen der Erfindung am einfachsten darstellbar ist. Eine Verallgemeinerung der erfindungsgemäßen Lehre auf Artikel 4, die keine Rotationssymmetrie aufweisen und bei denen die Hinterschneidungen 17A in beliebiger axialer und radialer Anordnung vorliegen, ist für den Fachmann ohne weiteres möglich und soll von dem Schutzbereich der Erfindung umfaßt werden. So sind beispielsweise polygonale Formen, evtl. mit abgerundeten Ecken, ovale oder allgemeine, asymmetrisch begrenzte Querschnitte herstellbar, wobei sich die Grenzen der Möglichkeiten aus einfachen geometrischen Überlegungen ergeben. Wie bereits oben erwähnt, gilt ähnliches auch für die Form und Anordnung der Hinterschneidungen, die keineswegs auf umlaufende oder rotationssymmetrische Formen beschränkt sind.

## Patentansprüche

1. Verfahren zum Entformen von Spritzgußhohlkörpern mit Hinterschneidungen in der Innenkontur unter Verwendung eines Formkerns, der im wesentlichen aus einem Innenkern und aus mindestens zwei Gruppen von relativ zum Innenkern verschiebbaren Segmenten besteht, wobei mindestens zwei verschieden geformte Arten von Segmenten Verwendung finden, die in vorgegebener Reihenfolge derart um den Innenkern angeordnet sind, daß sie in der Arbeitsposition des Formkerns zusammen mit dem Innenkern eine lückenlose Innenkontur des Artikels bilden und in der Entformungsposition die Hinterschneidungen so freigeben, daß der Artikel vom Formkern entfernbar ist, dadurch gekennzeichnet, daß
(a) in einem ersten Schritt zwischen dem Innenkern (5) und sämtlichen Segmenten eine Relativverschiebung um eine Strecke in axialer Richtung stattfindet,
(b) in einem zweiten Schritt eine vorbestimmte Gruppe von Segmenten (8) um eine vorgegebene Strecke im wesentlichen in radialer Richtung bewegt wird,
(c) in einem dritten Schritt die bisher nicht radial bewegten Segmente um eine vorgegebene Strecke in axialer Richtung verschoben werden,
(d) in einem vierten Schritt die Segmente der in Schritt (c) verschobenen Gruppen um eine vorgegebene Strecke im wesentlichen in radialer Richtung bewegt werden,
(e) die Schritte (c) und (d) solange wiederholt werden, bis sämtliche Gruppen von Segmenten in Bezug auf die Längsachse (6) des Innenkerns (5) um jeweils vorgegebene axiale bzw. radiale Strecken bewegt wurden.

2. Verfahren zum Entformen von Spritzgußhohlkörpern mit Hinterschneidungen in der Innenkontur unter Verwendung eines Formkerns, der im wesentlichen aus einem Innenkern und aus mindestens zwei Gruppen von relativ zum Innenkern verschiebbaren Segmenten besteht, wobei mindestens zwei verschieden geformte Arten von Segmenten Verwendung finden, die in vorgegebener Reihenfolge derart um den Innenkern angeordnet sind, daß sie in der Arbeitsposition des Formkerns zusammen mit dem Innenkern eine lückenlose Innenkontur des Artikels bilden und in der Entformungsposition die Hinterschneidungen so freigeben, daß der Artikel vom Formkern entfernbar ist, dadurch gekennzeichnet, daß
(a) in einem ersten Schritt zwischen dem Innenkern (5) und sämtlichen Segmenten, die hinterschneidungsbildende Strukturen (17W) aufweisen, eine Relativverschiebung um eine Strecke in axialer Richtung stattfindet,
(b) in einem zweiten Schritt eine vorbestimmte Gruppe von diesen Segmenten (8) um eine vorgegebene Strecke im wesentlichen in radialer Richtung bewegt wird,
(c) in einem dritten Schritt die bisher nicht radial bewegten Segmente dieser Gruppe um eine vorgegebene Strecke in axialer Richtung verschoben werden,
(d) in einem vierten Schritt die Segmente der in Schritt (c) verschobenen Gruppen um eine vorgegebene Strecke im wesentlichen in radialer Richtung bewegt werden,
(e) die Schritte (c) und (d) solange wiederholt werden, bis sämtliche Gruppen von Segmenten, die hinterschneidungsbildende Strukturen (17W) aufweisen, in Bezug auf die Längsachse (6) des Innenkerns (5) um jeweils vorgegebene axiale bzw. radiale Strecken bewegt wurden,
- und alle Segmente, die keine hinterschneidungsbildende Strukturen (17W) aufweisen, relativ zum Innenkern (5) keine Verschiebung erfahren, indem sie insbesondere mit dem Innenkern festverbunden oder einstückig mit diesem ausgebildet sind.

3. Verfahren zum Entformen von Spritzgußhohlkörpern mit Hinterschneidungen in der Innenkontur unter Verwendung eines Formkerns, der im wesentlichen aus einem Innenkern und aus mindestens zwei Gruppen von relativ zum Innenkern verschiebbaren Segmenten besteht, wobei mindestens zwei verschieden geformte Arten von Segmenten Verwendung finden, die in vorgegebener Reihenfolge derart um den Innenkern angeordnet sind, daß sie in der Arbeitsposition des Formkerns zusammen mit dem Innenkern eine lückenlose Innenkontur des Artikels bilden und in der Entformungsposition die Hinterschneidungen so freigeben, daß der Artikel vom Formkern entfernbar ist, dadurch gekennzeichnet, daß
(a) in einem ersten Schritt zwischen dem Innenkern (5) und sämtlichen Segmenten eine Relativverschiebung um eine Strecke in axialer Richtung stattfindet,
(b) in einem zweiten Schritt eine vorbestimmte Gruppe von Segmenten (8) um eine vorgegebene Strecke im wesentlichen in radialer Richtung bewegt wird,
(c) in einem dritten Schritt die bisher nicht radial bewegten Segmente, die hinterschneidungsbildende Strukturen (17W) aufweisen, um eine vorgegebene Strecke in axialer Richtung verschoben werden,
(d) in einem vierten Schritt die Segmente einer der in Schritt (c) verschobenen Gruppen um eine vorgegebene Strecke im wesentlichen in radialer Richtung bewegt werden,
(e) die Schritte (c) und (d) solange wiederholt werden, bis sämtliche Gruppen, deren Segmente hinterschneidungsbildende Strukturen (17W) aufweisen, in Bezug auf die Längsachse (6) des Innenkerns (5) um jeweils vorgegebene axiale bzw. radiale Strecken bewegt wurden,
- wobei alle Segmente, die keine hinterschneidungsbildende Strukturen (17W) aufweisen, nur dem Verfahrensschritt (a) oder den Verfahrensschritten (a) und (b) unterzogen werden.

4. Verfahren nach einem der Ansprüche 1 bis 3, dadurch gekennzeichnet, daß die jeweils vorgegebenen Strecken, die in axialer Richtung verlaufen, derart bemessen sind, daß bei den jeweils anschließenden radialen Bewegungen der Segmente keine Kollisionen der Segmente mit dem Innenkern (5) bzw. Segmenten einer anderen Gruppe stattfinden können und
- daß die jeweils vorgegebenen Strecken, die in radialer Richtung verlaufen, derart bemessen sind, daß bei der radialen Bewegung der Segmente keine Kollisionen mit benachbarten Segmenten der selben Gruppe stattfinden können.

5. Verfahren nach einem der Ansprüche 1 bis 4, dadurch gekennzeichnet, daß die radialen Bewegungen auch axiale Komponenten besitzen, die konstant oder zeitlich und/oder räumlich veränderlich sind.

6. Verfahren nach einem der Ansprüche 1 bis 5, dadurch gekennzeichnet, daß mehrere Verfahrensschritte, zumindest teilweise, zeitgleich ablaufen.

7. Formkern zur Durchführung des Verfahrens nach einem der Ansprüche 1 bis 6, mit einem eine Längsachse (6) aufweisenden Innenkern (5) und mit
- je einer Gruppe von jeweils ersten und zweiten Segmenten, die abwechselnd um den Innenkern (5) angeordnet sind und die Segmente der ersten Gruppe (8) parallele oder nach innen geneigte Flanken (40) aufweisen, mit denen sie in der Arbeitsposition an die benachbarten Segmente der zweiten Gruppe (7) angrenzen
- und die zwischen einer Arbeitsposition, in der die Außenseiten der Segmente lückenlos aneinandergrenzen und einer Entformungsposition, in der die Segmente die Hinterschneidungen (17) derart freigeben, daß der Artikel (4) vom Formkern (3) entfernbar ist, bewegbar sind,
- wobei die Führungs- und Steuereinrichtungen die Segmente derart steuern, daß jeweils die Segmente der ersten Gruppe (8) und der zweiten Gruppe (7) um jeweils vorbestimmte Strecken in Richtung der Längsachse (6) des Innenkerns (5) bzw. in einer hierzu im wesentlichen senkrechten, radialen Richtung bewegbar sind, dadurch gekennzeichnet,
- daß die Segmente der beiden Gruppen (7, 8) zusammen mit dem Innenkern die Form der Innenwandung des Artikels festlegen,
- daß die Segmente zusätzlich zu dem die Innenwandung des Artikels festlegenden Bereich (35) einen zweiten Bereich (36) aufweisen, der sich im wesentlichen in radialer Richtung nach außen erstreckt und an dem Führungselemente für die Bewegung und Steuerung des Segments in Eingriff bringbar sind,
- daß der Innenkern (5) im Berührungsbereich (42) der Segmente einen konstanten Querschnitt entlang seiner Längsachse (6) aufweist,
- und daß die radialen und axialen Bewegungsschritte zeitlich nacheinander durchführbar sind.

8. Formkern nach Anspruch 7, dadurch gekennzeichnet, daß der Innenkern (5) einen kreisförmigen, abgerundeten oder polygonalen Querschnitt hat.

9. Formkern nach Anspruch 7, dadurch gekennzeichnet, daß der Innenkern (5) sich in seiner Längsrichtung erstreckende Nuten (43) aufweist.

10. Formkern nach einem der Ansprüche 7 bis 9, dadurch gekennzeichnet, daß die vordere Stirnfläche (28) des Innenkerns (5) eben, gewölbt und/oder mit sich in axialer Richtung erstreckenden Erhöhungen (45) oder Vertiefungen (46) versehen ist.

11. Formkern nach einem der Ansprüche 7 bis 10, dadurch gekennzeichnet, daß der Innenkern (5) aus einem hohlen Mantel (49) und einem darin angeordneten Mittelkern (41) besteht.

12. Formkern nach Anspruch 11, dadurch gekennzeichnet,
- daß der Mittelkern (41) in Bezug auf den Mantel (49) in axialer Richtung verschieblich ist und
- daß sich dem Mittelkern (41) an seinem vorderen Ende ein sich in axialer Richtung erstreckender Kopfbereich (44) anschließt, dessen Durchmesser größer als der Innendurchmesser des Mantels (49) ist und dessen vordere Stirnfläche sich in axialer Richtung erstreckende Vertiefungen und/oder Erhöhungen (37) aufweist.

13. Formkern nach einem der Ansprüche 7 bis 12, dadurch gekennzeichnet daß der Innenkern (5) an seiner vorderen Stirnfläche (28) Verriegelungselemente (30) aufweist, die mit komplementären Elementen (29) an allen oder einzelnen, ausgewählten Segmenten zusammenwirken und die eine radiale Bewegung der Segmente vom Innenkern (5) weg verhindern.

14. Formkern nach einem der Ansprüche 7 bis 13, dadurch gekennzeichnet, daß die Segmente abgeschrägte oder konische Flächen bzw. Bereiche (31S, 32S) aufweisen, die mit komplementären Flächen oder Bereichen (32) an der Auswerferplatte (9) bzw. Flächen oder Bereichen (31) am Innenkern (5) in Eingriff bringbar sind.

15. Formkern nach Anspruch 7, dadurch gekennzeichnet, daß sich an den zweiten Bereich eine Kurvenplatte (13G, 13K), anschließt, die einen Teil der Führungselemente und der Steuerung des Segments enthält.

16. Formkern nach Anspruch 15, dadurch gekennzeichnet, daß in der Kurvenplatte (13G, 13K) mindestens eine Führungsbahn (15) bzw. ein Führungsstift (14) ausgebildet ist, die bzw. der mit jeweils dem komplementären Führungselement in einer Schieberplatte (10, 11) des Spritzgußwerkzeuges (1) zusammenwirkt.

17. Formkern nach Anspruch 16, dadurch gekennzeichnet, daß die Führungsbahn (15) axiale Führungsabschnitte (33) und radial/axiale Führungsabschnitte (34) aufweist, die Größe und Richtung von axialen und radialen Verschiebewegen des zugehörigen Segments festlegen.

18. Formkern nach einem der Ansprüche 7 bis 17, dadurch gekennzeichnet, daß zwischen dem Innenkern (5) und allen oder ausgewählten Segmenten zumindest bereichsweise, Wälzkörperführungen vorhanden sind.

19. Formkern nach einem der Ansprüche 7 bis 18, dadurch gekennzeichnet, daß die Antriebe für die einzelnen Bewegungsphasen bzw. -komponenten als jeweils getrennte Einheiten ausgebildet sind.

20. Formkern nach einem der Ansprüche 7 bis 19, dadurch gekennzeichnet, daß zumindest jeder Gruppe von Segmenten ein eigener Antrieb zugeordnet ist.

21. Formkern nach einem der Ansprüche 7 bis 20, dadurch gekennzeichnet, daß der Innenkern (5) über einen Antrieb entlang seiner Längsachse (6) bewegbar ist.

22. Formkern nach einem der Ansprüche 7 bis 21, dadurch gekennzeichnet, daß die durch Oberflächenverschleiß gefährdeten Bauteile, wie Innenkern (5), Segmente, Führungsstifte (14) und Kurvenplatte (13G, 13K), einer thermischen Behandlung oder einer Beschichtung mit verschleißmindernden Stoffen zur Erhöhung der Oberflächenhärte unterzogen sind.

## Claims

1. Method for demoulding injection moulded hollow bodies with undercuts in the internal contour using a mould core consisting essentially of an inner core and at least two groups of segments displaceable relative to the inner core, at least two differently shaped types of segments being used which are arranged in a preset order around the inner core in such a way that, in the working position of the mould core, they form together with the inner core an uninterrupted internal contour of the article and, in the demoulding position, free the undercuts so that the article can be removed from the mould core, characterized in that
(a) in a first step, a relative displacement by a distance in the axial direction takes place between the inner core (5) and all the segments,
(b) in a second step, a predetermined group of segments (8) is moved by a preset distance substantially in the radial direction,
(c) in a third step, the segments which have not been moved radially hitherto are displaced by a preset distance in the axial direction,
(d) in a fourth step, the segments of the groups displaced in step (c) are moved by a preset distance substantially in the radial direction,
(e) the steps (c) and (d) are repeated until all the groups of segments have been moved by in each case preset axial and radial distances, respectively, in relation to the longitudinal axis (6) of the inner core (5).

2. Method for demoulding injection moulded hollow bodies with undercuts in the internal contour using a mould core consisting essentially of an inner core and at least two groups of segments displaceable relative to the inner core, at least two differently shaped types of segments being used which are arranged in a preset order around the inner core in such a way that, in the working position of the mould core, they form together with the inner core an uninterrupted internal contour of the article and, in the demoulding position, free the undercuts so that the article can be removed from the mould core, characterized in that
(a) in a first step, a relative displacement by a distance in the axial direction takes place between the inner core (5) and all the segments which have undercut-forming structures (17W),
(b) in a second step, a predetermined group of these segments (8) is moved by a preset distance substantially in the radial direction,
(c) in a third step, the segments of this group which have not been moved radially hitherto are displaced by a preset distance in the axial direction,
(d) in a fourth step, the segments of the groups displaced in step (c) are moved by a preset distance substantially in the radial direction,
(e) the steps (c) and (d) are repeated until all the groups of segments which have undercut-forming structures (17W) have been moved by in each case preset axial and radial distances, respectively, in relation to the longitudinal axis (6) of the inner core (5),
- and all the segments which do not have undercut-forming structures (17W) do not experience a displacement relative to the inner core (5), in that they are fixedly connected in particular to the inner core or are constructed in one piece therewith.

3. Method for demoulding injection moulded hollow bodies with undercuts in the internal contour using a mould core consisting essentially of an inner core and at least two groups of segments displaceable relative to the inner core, at least two differently shaped types of segments being used which are arranged in a preset order around the inner core in such a way that, in the working position of the mould core, they form together with the inner core an uninterrupted internal contour of the article and, in the demoulding position, free the undercuts so that the article can be removed from the mould core, characterized in that
(a) in a first step, a relative displacement by a distance in the axial direction takes place between the inner core (5) and all the segments,
(b) in a second step, a predetermined group of segments (8) is moved by a preset distance substantially in the radial direction,
(c) in a third step, the segments which have not been moved radially hitherto and which have undercut-forming structures (17W) are displaced by a preset distance in the axial direction,
(d) in a fourth step, the segments of one of the groups displaced in step (c) are moved by a preset distance substantially in the radial direction,
(e) the steps (c) and (d) are repeated until all the groups whose segments have undercut-forming structures (17W) have been moved by in each case preset axial and radial distances, respectively, in relation to the longitudinal axis (6) of the inner core (5),
- all the segments which do not have undercut-forming structures (17W) undergoing only the method step (a) or the method steps (a) and (b).

4. Method according to one of Claims 1 to 3, characterized in that the in each case preset distances running in the axial direction are dimensioned in such a way that, during the in each case subsequent radial movements of the segments, no collisions of the segments with the inner core (5) or segments of another group can take place and
- in that the in each case preset distances running in the radial direction are dimensioned in such a way that, during the radial movement of the segments, no collisions with adjacent segments of the same group can take place.

5. Method according to one of Claims 1 to 4, characterized in that the radial movements also have axial components which are constant or temporally and/or spatially variable.

6. Method according to one of Claims 1 to 5, characterized in that a plurality of method steps proceed, at least partly, simultaneously.

7. Mould core for carrying out the method according to one of Claims 1 to 6, with an inner core (5) having a longitudinal axis (6) and with
- one group each of in each case first and second segments which are arranged alternately around the inner core (5) and the segments of the first group (8) have parallel or inwardly inclined flanks (40) by which they border, in the working position, on the adjacent segments of the second group (7)
- and which are movable between a working position in which the outer sides of the segments border on one another uninterruptedly and a demoulding position in which the segments free the undercuts (17) in such a way that the article (4) can be removed from the mould core (3),
- the guide and control devices controlling the segments in such a way that in each case the segments of the first group (8) and of the second group (7) are movable by in each case predetermined distances in the direction of the longitudinal axis (6) of the inner core (5) and in a radial direction substantially perpendicular thereto, characterized
- in that the segments of the two groups (7, 8) together with the inner core define the shape of the internal wall of the article,
- in that the segments have, in addition to the region (35) defining the internal wall of the article, a second region (36) which extends outwards substantially in the radial direction and on which guide elements for the movement and control of the segment can engage,
- in that the inner core (5) has a constant cross-section along its longitudinal axis (6) in the contact region (42) of the segments,
- and in that the radial and axial movement steps can be carried out one after the other with regard to time.

8. Mould core according to Claim 7, characterized in that the inner core (5) has a circular, rounded or polygonal cross-section.

9. Mould core according to Claim 7, characterized in that the inner core (5) has grooves (43) extending in its longitudinal direction.

10. Mould core according to one of Claims 7 to 9, characterized in that the front face (28) of the inner core (5) is flat, curved and/or provided with elevations (45) or depressions (46) extending in the axial direction.

11. Mould core according to one of Claims 7 to 10, characterized in that the inner core (5) consists of a hollow shell (49) and a central core (41) arranged therein.

12. Mould core according to Claim 11, characterized
- in that the central core (41) is displaceable in the axial direction in relation to the shell (49) and
- in that the central core (41) is adjoined at its front end by a head region (44) which extends in the axial direction and whose diameter is larger than the inside diameter of the shell (49) and whose front face has depressions and/or elevations (37) extending in the axial direction.

13. Mould core according to one of Claims 7 to 12, characterized in that the inner core (5) has at its front face (28) locking elements (30) which cooperate with complementary elements (29) on all or individual, selected segments and which prevent a radial movement of the segments away from the inner core (5).

14. Mould core according to one of Claims 7 to 13, characterized in that the segments have bevelled or conical surfaces or regions (31S, 32S) which can engage with complementary surfaces or regions (32) on the ejection plate (9) and surfaces or regions (31) on the inner core (5).

15. Mould core according to Claim 7, characterized in that the second region is adjoined by a curved plate (13G, 13K) which contains some of the guide elements and control means for the segment.

16. Mould core according to Claim 15, characterized in that there is constructed in the curved plate (13G, 13K) at least one guide path (15) and one guide pin (14), which cooperate with in each case the complementary guide element in a slide plate (10, 11) of the injection mould (1).

17. Mould core according to Claim 16, characterized in that the guide path (15) has axial guide portions (33) and radial/axial guide portions (34) which define the size and direction of axial and radial displacement paths of the associated segment.

18. Mould core according to one of Claims 7 to 17, characterized in that rolling body guides are present, at least in regions, between the inner core (5) and all or selected segments.

19. Mould core according to one of Claims 7 to 18, characterized in that the drives for the individual movement phases or movement components are constructed as separate units in each case.

20. Mould core according to one of Claims 7 to 19, characterized in that at least each group of segments is assigned its own drive.

21. Mould core according to one of Claims 7 to 20, characterized in that the inner core (5) can be moved along its longitudinal axis (6) via a drive.

22. Mould core according to one of Claims 7 to 21, characterized in that the components at risk of surface wear, such as inner core (5), segments, guide pins (14) and curved plate (13G, 13K), are subjected to a heat treatment or a coating with wear-reducing substances to increase the surface hardness.

## Revendications

1. Procédé pour le démoulage de corps creux moulés par injection et comportant des contre-dépouilles dans le contour interne, lors d'une utilisation d'un noyau de moulage qui est constitué essentiellement d'un noyau interne et d'au moins deux groupes de segments qui peuvent être déplacés par rapport au noyau interne, dans lequel sont utilisés au moins deux genres de segments façonnés de façon différente et qui sont agencés dans un ordre prédéterminé autour du noyau interne de façon à ce qu'ils forment dans la position de travail du noyau de moulage, avec le noyau interne, un contour interne sans discontinuité de l'objet et de façon à ce que, dans la position de démoulage, ils libèrent les contre-dépouilles de manière à ce que l'objet puisse être retiré du noyau de moulage, caractérisé en ce que :
(a) dans une première étape, il y a entre le noyau interne (5) et tous les segments un déplacement relatif d'une distance en direction axiale,
(b) dans une seconde étape, un groupe prédéterminé de segments (8) est déplacé sensiblement en direction radiale sur une distance prédéterminée,
(c) dans une troisième étape, les segments non déplacés radialement jusqu'à ce moment sont déplacés en direction axiale sur une distance prédéterminée,
(d) dans une quatrième étape, les segments des groupes déplacés dans l'étape (c) sont déplacés sensiblement en direction radiale sur une distance prédéterminée,
(e) les étapes (c) et (d) sont répétées jusqu'à ce que tous les groupes de segments ont été déplacés sur des distances respectivement prédéterminées, axiales ou respectivement radiales, par rapport à l'axe longitudinal (6) du noyau interne (5).

2. Procédé pour le démoulage de corps creux moulés par injection et comportant des contre-dépouilles dans le contour interne, lors d'une utilisation d'un noyau de moulage qui est constitué essentiellement d'un noyau interne et d'au moins deux groupes de segments qui peuvent être déplacés par rapport au noyau interne, dans lequel sont utilisés au moins deux genres de segments façonnés de façon différente et qui sont agencés dans un ordre prédéterminé autour du noyau interne de façon à ce qu'ils forment dans la position de travail du noyau de moulage, avec le noyau interne, un contour interne sans discontinuité de l'objet et de façon à ce que, dans la position de démoulage, ils libèrent les contre-dépouilles de manière à ce que l'objet puisse être retiré du noyau de moulage, caractérisé en ce que :
(a) dans une première étape, il y a un déplacement relatif, sur une distance en direction axiale, entre le noyau interne (5) et tous les segments qui présentent des structures (17W) formant des contre-dépouilles,
(b) dans une seconde étape, un groupe prédéterminé de ces segments (8) est déplacé sensiblement en direction radiale sur une distance prédéterminée,
(c) dans une troisième étape, les segments de ce groupe, non déplacés radialement jusqu'à ce moment, sont déplacés en direction axiale sur une distance prédéterminée,
(d) dans une quatrième étape, les segments des groupes déplacés dans l'étape (c) sont déplacés sensiblement en direction radiale sur une distance prédéterminée,
(e) les étapes (c) et (d) sont répétées jusqu'à ce que tous les groupes de segments qui présentent des structures (17W) formant des contre-dépouilles ont été déplacés sur des distances respectivement prédéterminées, axiales ou respectivement radiales, relativement à l'axe longitudinal du noyau interne,
- et tous les segments qui ne présentent aucune structure (17W) formant une contre-dépouille n'exécutent aucun déplacement par rapport au noyau interne (5); ils sont en particulier reliés fixement au noyau interne ou réalisés en une pièce avec celui-ci.

3. Procédé pour le démoulage de corps creux moulés par injection et comportant des contre-dépouilles dans le contour interne, lors d'une utilisation d'un noyau de moulage qui est constitué essentiellement d'un noyau interne et d'au moins deux groupes de segments qui peuvent être déplacés par rapport au noyau interne, dans lequel sont utilisés au moins deux genres de segments façonnés de façon différente et qui sont agencés dans un ordre prédéterminé autour du noyau interne de façon à ce qu'ils forment dans la position de travail du noyau de moulage, avec le noyau interne, un contour interne sans discontinuité de l'objet et de façon à ce que, dans la position de démoulage, ils libèrent les contre-dépouilles de manière à ce que l'objet puisse être retiré du noyau de moulage, caractérisé en ce que :
(a) dans une première étape, il y a un déplacement relatif, sur une distance en direction axiale, entre le noyau interne (5) et tous les segments,
(b) dans une seconde étape, un groupe prédéterminé de segments (8) est déplacé sensiblement en direction radiale sur une distance prédéterminée,
(c) dans une troisième étape, les segments qui n'ont pas été déplacés radialement jusqu'à ce moment et qui présentent des structures (17W) formant des contre-dépouilles sont déplacés en direction axiale d'une distance prédéterminée,
(d) dans une quatrième étape, les segments d'un des groupes déplacés dans l'étape (c) sont déplacés sensiblement en direction radiale sur une distance prédéterminée,
(e) les étapes (c) et (d) sont répétées jusqu'à ce que tous les groupes dont les segments présentent des structures (17W) formant des contre-dépouilles ont été déplacés sur des distances respectivement prédéterminées, axiales ou respectivement radiales, relativement à l'axe longitudinal (6) du noyau interne (5),
- tous les segments qui ne présentent aucune structure (17W) formant une contre-dépouille ne sont soumis qu'à l'étape de procédé (a) ou aux étapes de procédé (a) et (b).

4. Procédé suivant l'une des revendications 1 à 3, caractérisé en ce que
- les distances respectivement prédéterminées, qui s'étendent en direction axiale sont dimensionnées de façon à ce qu'acune collision entre les segments et le noyau interne (5) ou des segments d'un autre groupe ne puisse avoir lieu lors des mouvements radiaux respectivement suivants des segments et
- les distances respectivement prédéterminées, qui s'étendent en direction radiale sont dimensionnées de façon à ce qu'acune collision ne puisse avoir lieu avec des segments voisins du même groupe, lors du mouvement radial des segments.

5. Procédé suivant l'une des revendications 1 à 4, caractérisé en ce que les mouvements radiaux comportent également des composantes axiales qui sont constantes ou changeantes dans le temps et/ou dans l'espace.

6. Procédé suivant l'une des revendications 1 à 5, caractérisé en ce que plusieurs étapes de procédé se déroulent, au moins partiellement, au même moment.

7. Noyau de moulage pour la mise en oeuvre du procédé suivant l'une des revendications 1 à 6, comportant un noyau interne (5) qui présente un axe longitudinal (6) et comportant
- chaque fois un groupe respectivement de premiers et de seconds segments qui sont agencés de façon alternée autour du noyau interne (5), les segments du premier groupe (8) présentant des flancs (40), parallèles ou inclinées vers l'intérieur, par lesquels ils sont contigus des segments voisins du second groupe (7)dans la position de travail, et
- qui peuvent être déplacés entre une position de travail, dans laquelle les faces externes des segments sont contiguës l'une de l'autre sans discontinuité, et une position de démoulage, dans laquelle les segments libèrent les contre-dépouilles (17) de façon à ce que l'objet (4) puisse être retiré du noyau de moulage (3),
- les dispositifs de guidage et de commande commandant les segments de façon à ce que respectivement les segments du premier groupe (8) et du second groupe puissent être déplacés sur des distances respectivement prédéterminées, selon la direction de l'axe longitudinal (6) du noyau interne (5) ou respectivement selon une direction radiale sensiblement perpendiculaire à la précédente, caractérisé en ce que :
-- les segments des deux groupes (7, 8) déterminent avec le noyau interne la forme de la paroi interne de l'objet,
-- les segments présentent, en plus de la zone (35) qui détermine la paroi interne de l'objet, une seconde zone (36) qui s'étend sensiblement en direction radiale vers l'extérieur et sur laquelle peuvent être mis en prise des éléments de guidage pour le mouvement et la commande du segment,
-- le noyau interne (5) présente dans la zone de contact (42) des segments une section transversale constante le long de son axe longitudinal (6), et
-- les étapes de mouvements radiaux et axiaux peuvent être exécutées l'une après l'autre dans le temps.

8. Noyau de moulage suivant la revendication 7, caractérisé en ce que le noyau interne (5) présente une section transversale circulaire, arrondie ou polygonale.

9. Noyau de moulage suivant la revendication 7, caractérisé en ce que le noyau interne (5) présente des rainures (43) s'étendant selon sa direction longitudinale.

10. Noyau de moulage suivant l'une des revendications 7 à 9, caractérisé en ce que la surface frontale (28) du noyau interne (5) est munie de bosses (45), ou de creux (46), plans, bombés et/ou s'étendant en direction axiale.

11. Noyau de moulage suivant l'une des revendications 7 à 10, caractérisé en ce que le noyau interne (5) consiste en une enveloppe creuse (49) et un noyau médian (41) agencé là-dedans.

12. Noyau de moulage suivant la revendication 11, caractérisé en ce que
- le noyau médian (41) peut être déplacé en direction axiale par rapport à l'enveloppe (49) et
- sur le noyau médian (41), à son extrémité antérieure se raccorde une zone sommitale (44) qui s'étend en direction axiale et dont le diamètre est supérieur au diamètre interne de l'enveloppe (49) et dont la surface frontale antérieure présente des creux, et/ou des bosses (37), qui s'étendent en direction axiale.

13. Noyau de moulage suivant l'une des revendications 7 à 12, caractérisé en ce que le noyau interne (5) présente sur sa surface frontale antérieure (28) des éléments de blocage (30) qui coopèrent avec des éléments complémentaires (29) de tous les segments ou de quelques sélectionnés, et qui empêchent un mouvement radial des segments s'écartant du noyau interne (5).

14. Noyau de moulage suivant l'une des revendications 7 à 13, caractérisé en ce que les segments présentent des surfaces ou zones (31S, 32S) chanfreinées ou coniques qui peuvent être mises en prises avec des surfaces ou zones (32) complémentaires de la plaque d'éjection (9) ou bien des surfaces ou zones (31) du noyau interne (5).

15. Noyau de moulage suivant la revendication 7, caractérisé en ce qu'une plaque à courbe (13G, 13K), qui comporte une partie des éléments de guidage et de la commande du segment, se raccorde à la deuxième zone.

16. Noyau de moulage suivant la revendication 15, caractérisé en ce qu'il est réalisé dans la plaque à courbe (13G, 13K) au moins une piste de guidage (15) ou bien une broche de guidage (14) qui coopère respectivement avec l'élément de guidage complémentaire d'une plaque coulissante (10, 11) de l'outil de moulage par injection (1).

17. Noyau de moulage suivant la revendication 16, caractérisé en ce que la piste de guidage (15) présente des tronçons de guidage axiaux (33) et des tronçons de guidage radiaux/axiaux (34) qui déterminent les grandeur et direction des courses de déplacement axiales et radiales du segment correspondant.

18. Noyau de moulage suivant l'une des revendications 7 à 17, caractérisé en ce qu'il y a entre le noyau interne (5) et tous les segments ou des segments sélectionnés, au moins par zone, des guidages à corps cylindriques.

19. Noyau de moulage suivant l'une des revendications 7 à 18, caractérisé en ce que les entraînements pour les phases, ou bien composantes, de mouvement séparées sont réalisés sous la forme d'ensembles chaque fois séparés.

20. Noyau de moulage suivant l'une des revendications 7 à 19, caractérisé en qu'à au moins chaque groupe de segments est adjoint un entraînement propre.

21. Noyau de moulage suivant l'une des revendications 7 à 20, caractérisé en ce que le noyau interne (5) peut être déplacé par l'intermédiaire d'un entraînement, le long de son axe longitudinal (6).

22. Noyau de moulage suivant l'une des revendications 7 à 21, caractérisé en ce que les éléments constitutifs mis en danger par une usure de surface, comme le noyau interne (5), des segments, des broches de guidage (14) et des plaques à courbe (13G, 13K) sont soumis à un traitement thermique ou à un recouvrement avec des matières réduisant l'usure, en vue de l'augmentation de la dureté superficielle.
